(19) **Europäisches Patentamt**

**European Patent Office**

**Office européen des brevets**

(11) **EP 1 059 326 A2**

(12) **EUROPEAN PATENT APPLICATION**

(43) Date of publication:
**13.12.2000 Bulletin 2000/50**

(51) Int Cl.[7]: **C08J 5/18**
// C08L23:08

(21) Application number: **00304941.8**

(22) Date of filing: **12.06.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **11.06.1999 JP 16511099**<br>**22.05.2000 JP 2000154427**<br><br>(71) Applicant: **Mitsui Chemicals, Inc.**<br>**Tokyo 100-6070 (JP)** | (72) Inventors:<br>• **Takahashi, Mamoru, c/o Mitsui Chemicals, Inc.**<br>**Kuga-gun, Yamaguchi 740-0061 (JP)**<br>• **Hamada, Naoshi, c/o Mitsui Chemicals, Inc.**<br>**Ichihara-shi, Chiba 299-0108 (JP)**<br>• **Yamamoto, Akihiko, c/o Mitsui Chemicals, Inc.**<br>**Ichihara-shi, Chiba 299-0108 (JP)**<br><br>(74) Representative: **Cresswell, Thomas Anthony**<br>**J.A. KEMP & CO.**<br>**14 South Square**<br>**Gray's Inn**<br>**London WC1R 5LX (GB)** |

(54) **Packaging film and use of the same**

(57) A packaging film layer

(a) comprising an ethylene/$\alpha$-olefin copolymer (A) comprising ethylene and $C_{3 \text{ to } 20}$ $\alpha$-olefin and having:

(i) a melt tension (MT (g)) at 190 $^\circ$C and a melt flow rate (MFR (g/10 min)) which satisfy the following relation:

$$MT > 2.2 \times MFR^{-0.84};$$

(ii) a quantity fraction (W (% by weight)) of n-decane-soluble component at room temperature and a density (d (g/cm$^3$)) which satisfy the following relation:

in the case of MFR $\leq$ 10 g/10 min:

$$W < 80 \times \exp(-100 (d-0.88)) + 0.1$$

and,
in the case of MFR > 10 g/10 min:

$$W < 80 \times (MFR-9)^{0.26} \times \exp(-100(d-0.88)) + 0.1;$$

(iii) a temperature (Tm ($^\circ$C)) at maximum peak position in an endothermic curve as measured by a differential scanning calorimeter (DSC) and a density (d (g/cm$^3$)) which satisfy the following relation:

$$Tm < 400 \times d - 248,$$

and

(b) is obtainable by molding a resin under the following conditions:

the melt flow rate (MFR (g/10 min)) of the resin, the resin pressure P (kg/cm$^2$), the resin temperature T (°C ), the resin throughput K (kg/hr) and the lip sectional area A (cm$^2$) of a film forming machine satisfy the following relation:

$$200 \times [K/(MFR^{1.5})/(T-120)/A^{0.2}]^{0.2} \leq P$$

$$\leq 450 \times [K/MFR^{1.5})/(T-120)/A^{0.2}]^{0.2}$$

**Description**

FIELD OF THE INVENTION

The present invention relates to a packaging film for use, for example, in the production of packaging containers and in the packaging, and also relates to use of the packaging film.

BACKGROUND OF THE INVENTION

Recently, packaging of foods and non-food products with films is increasingly carried out, and various kinds of films are used depending on contents to be packaged. Packaging films include shrinkable films, stretchable films and sealant films for use in producing pouches and the like, as well as those for use in producing so called inner containers for bag-in-box.

The above-mentioned shrinkable films are used for packaging foods and non-food products, and have wide applications because they can shrink upon heating after packaging to provide tight packages (shrinked packages). The shrinkable films include domestic wrapping films, marketing wrapping films and industrial shrinkable films. Polyethylene films which are most generally used as shrinkable films are those of a high-pressure low-density polyethylene (HP-LDPE). Such films can readily be produced from the high-pressure low-density polyethylene by the use of a blown-film extrusion (inflation) machine so as to mold a tubular film at a high blow-up ratio.

However, these blown films of the high-pressure low-density polyethylene are not always sufficient in dart impact strength. Further, when conventional linear low-density polyethylenes (LLDPE) are used in the blown-film extrusion process, it is difficult to carry out the process at a high blow-up ratio due to their insufficient melt tension (MT). Even if the blown-film extrusion can be carried out, the resulting films have insufficient orientation of molecules and the heat-shrinkage degree enough to be used for shrink packaging cannot be achieved.

The above-mentioned stretchable films are used for packaging foods and non-food products, and have also wide applications because they can be stretched after packaging to provide tight packages (stretched packages). Polyethylene films which are currently most generally used as stretchable films are those formed of a linear low-density polyethylene (LLDPE) which are prepared by the use of a Ziegler catalyst or a metallocene catalyst. Such films can readily be produced from the linear low-density polyethylene by the use of a cast film molding machine or a blown-film extrusion machine.

However, a conventional LLDPE has a high resin pressure and a high resin temperature in film molding, so that they often cause formation of gel-like substances and gum-like spots for a long period of film production time. Therefore, it has been required to take apart and clean dies and extruders.

The above-mentioned sealant films are widely used as packaging materials for foods and pharmaceutical preparations, for example in the form of a composite film comprising a substrate such as paper and a sealant (heat-sealing) layer provided thereon, and a monolayered film of a sealant layer alone. These films are used as sealant films, for example, to produce retort pouches. The composite film can be produced by laminating a substrate and a sealant material by a dry lamination process or an extrusion laminating process.

For example, in the extrusion laminating process, a polyethylene mainly used as a sealant material was at first a high-pressure-produced low-density polyethylene (HP-LDPE), which was then replaced by a Ziegler catalyzed linear low-density polyethylene (T-LLDPE). The T-LLDPE permitted production of composite films having excellent mechanical characteristics such as film strength and sealing characteristics such as heat-sealing property and hot tack property. The T-LLDPE was then replaced by a metallocene catalyzed linear low-density polyethylene (M-LLDPE). The use of the M-LLDPE permitted not only further improvement in the above-mentioned mechanical and sealing characteristics, but also production of composite films having much better low-temperature sealing properties which were not in the past, because lowering of the density became possible.

However, since the T-LLDPE has a higher resin extrusion pressure as compared to the HP-LDPE, it is disadvantageous for the high-speed production. For example, the T-LLDPE is not suitable for processing with a screw operated at a high compression ratio, and thus an idea is necessary for the configuration of the screw to increase a throughput in extrusion of a resin. Further, the T-LLDPE disadvantageously has a large neck-in in film molding, so that it needs an enlarged slit width, leading to increasing the production loss. This tendency is also found in the case where the M-LLDPE is used.

The above-mentioned "bag-in-box" refers to a container made up of outer boxes such as corrugated boxes and synthetic resin inner bags encased therein. Because of their excellent flexibility and economical effects, these inner containers have been widely used as containers for various liquids such as liquors, vinegars, photographic developers, bleaching solutions and bactericide solutions.

Such a soft, thin-walled synthetic resin inner container used for the bag-in-box can be produced by melt-extruding a synthetic resin; immediately thereafter, forming two halved containers by means of compressed-air molding, vacuum molding or blow molding by the use of a mold capable of joining the two halved containers on their diagonals; and thereafter or simultaneously therewith, joining these halved containers together.

The inner container for bag-in-box thus produced is maintained in folded state before it is used, that is, one half is tucked into another, from the viewpoint of transport efficiency and handling properties.

A synthetic resin used for producing such an inner container is required not only to have a high melt tension and a good moldability, but also to provide films having a high folding endurance (holding property) enough to prevent occurrence of pinholes and tears due to creases.

In order to meet these requirements, in particular to keep the folding property, an ethylene/vinyl acetate copolymer (EVA) and a polyethylene resin composition comprising a linear polyethylene compounded with an EVA or high-pressure low-density polyethylene are conventionally used as resins for the inner container for bag-in-box.

However, in the use of EVA only, obtainable is an inner container having poor pinhole resistance and flex resistance, though its folding property is good. In the use of the linear polyethylene only, the resulting inner container shows poor moldability due to its low melt tension, though it has good pinhole resistance. Further, for the polyethylene resin composition comprising the linear polyethylene compounded with the EVA or high-pressure low-density polyethylene, a large amount of the EVA or high-pressure low-density polyethylene must be added to the linear polyethylene in order to improve its moldability, resulting in an inner container having poor anti-pinhole properties and flex resistance.

It is known that an ethylene copolymer obtained by the use of a metallocene catalyst has advantageous properties, for example, narrow composition distribution to provide molded products such as films almost free from tackiness, that is, the molded products hardly suffer from blocking. For example, JP-A-60-35007, however, describes that ethylene polymers obtained by the use of a catalyst comprising a zirconocene compound having a cyclopentadienyl derivative contain one terminal unsaturated bond per one molecule, and thus it is presumed that these ethylene polymers have poor heat stability. Because of their narrow molecular weight distribution, it is also concerned that these polymers may show poor flowability in an extrusion molding process.

JP-A-4-189769 proposes synthetic resin inner containers for bag-in-box, which are molded from a resin composition comprising a linear polyethylene and a low-density polyethylene in a blend ratio of 55/45 to 65/35. According to this publication, it is said that the resin is firmly bonded at fusion bonding portions so that the resulting inner container is free from separation, and that the container endures to breakage by folding. Although the synthetic resin inner container for bag-in-box as proposed in the publication can be molded with good moldability, it has a problem that pinholes or cracks are apt to occur in the state where the inner container is severely folded, because 35 % by weight or more of the low-density polyethylene is blended into the linear polyethylene.

The present inventors have disclosed in JP-A-9-169359 that by the use of a specific ethylene copolymer which is a copolymer obtained by copolymerizing ethylene and an $\alpha$-olefin of 3 to 20 carbon atoms in the presence of a metallocene catalyst, which has specific ranges of its density and melt flow rate and satisfies a specific relation between its temperature (melting point: Tm) at the maximum peak position of the endothermic curve as measured by a differential scanning calorimeter (DSC) and its density (d), it is possible to produce an inner container for bag-in-box in which occurrence of pinholes and breakages by folding are extensively suppressed.

However, the moldability of films for use in the polyethylene resin inner container for bag-in-box is not necessarily sufficient.

Accordingly, it is desired to develop shrinkable films for shrink packaging, which can be molded by blown-film extrusion at a high blow-up ratio and with excellent moldability, and further which have not only a heat-shrinkage degree enough to be used for shrink packaging but also have excellent dart impact strength properties.

It is also desired to develop stretchable films for stretch packaging, which can continuously be produced for a long period of time by cast film molding and blown-film extrusion with excellent moldability.

It is further desired to develop sealant films which can be produced at a high production rate with excellent moldability and decreased neck-in without impairing the excellent mechanical and sealing characteristics owned by the M-LLDPE itself, and pouches formed from such sealant films.

It is still further desired to develop inner containers for bag-in-box, which are formed from polyethylene resin films excellent in moldability.

OBJECT OF THE INVENTION

It is a general object of the present invention to provide packaging films which can be molded with excellent moldability.

More specifically, it is an object of the invention to provide shrinkable films for shrink packaging which can be molded by blown-film extrusion with a high blow-up ratio, and which have a heat-shrinkage degree enough to be used for shrink packaging and have an excellent dart impact strength.

It is another object of the invention to provide stretchable films for stretch packaging, which can continuously be produced for a long period of time by cast film molding and blown-film extrusion.

It is a further object of the invention to provide sealant films which can be produced at a high production rate with excellent moldability and decreased neck-in without impairing the excellent mechanical and sealing characteristics owned by the M-LLDPE itself.

It is a still further object of the present invention to provide inner containers for bag-in-box, which can be produced from polyethylene resin films excellent in moldability.

SUMMARY OF THE INVENTION

The present invention provides a packaging film formed from one or more layers,

wherein at least one layer of said film comprises an ethylene/α-olefin copolymer (A) (resin) comprising ethylene and an α-olefin of 3 to 20 carbon atoms,
said ethylene/α-olefin copolymer (A) having the following properties:

(i) the melt tension (MT (g)) at 190 °C and the melt flow rate (MFR (g/10 min)) satisfy the following relation:

$$MT > 2.2 \times MFR^{-0.84} \; ;$$

(ii) the quantity fraction (W (% by weight)) of n-decane-soluble component at room temperature and the density (d (g/cm$^3$)) satisfy the following relation:

in the case of MFR ≤ 10 g/10 min:

$$W < 80 \times \exp(-100(d-0.88)) + 0.1$$

and
in the case of MFR > 10 g/10 min:

$$W < 80 \times (MFR-9)^{0.26} \times \exp(-100(d-0.88)) + 0.1;$$

(iii) the temperature (Tm (°C)) at maximum peak position in an endothermic curve as measured by a differential scanning calorimeter (DSC) and the density (d (g/cm$^3$)) satisfy the following relation:

$$Tm < 400 \times d - 248,$$

and
said at least one layer is molded under the following conditions:
the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T-120)/A^{0.2}]^{0.2} \leq P$$

$$\leq 450 \times [K/(MFR^{1.5})/(T-120)/A^{0.2}]^{0.2} \; .$$

As the above-mentioned ethylene/α-olefin copolymers (A), preferred are the following copolymers:

(1) An ethylene/α-olefin copolymer (A) which satisfies the relations (i), (ii) and (iii) as described above, and further, which has (iv) at least two peaks in the endothermic curve as measured by a differential scanning calorimeter (DSC).
(2) An ethylene/α-olefin copolymer (A) which satisfies the relations (i), (ii) and (iii) as described above, and further, which contains (v) a non-eluting fraction at a temperature of lower than 100 °C, as measured by a temperature rise elution test (TREF), the amount of said component being not more than 10 % based on the total amount of the copolymer.

(3) An ethylene/$\alpha$-olefin copolymer (A) which satisfies the relations (i), (ii) and (iii) as described above, and further, which contains (vi) long chain blanches having at least 6 carbon atoms, as measured by NMR, the number of said long chain blanches being more than 3 per 1,000 carbon atoms, and especially an ethylene/$\alpha$-olefin copolymer (A) which satisfies the relations (i), (ii) and (iii) as described above, and further, which contains (vii) long chain blanches having at least 6 carbon atoms, as measured by NMR, the number of said long chain blanches being more than 3 per 1,000 carbon atoms, in the case where the copolymerized $\alpha$-olefin has more than 7 carbon atoms.

(4) An ethylene/$\alpha$-olefin copolymer (A) which satisfies the relations (i), (ii) and (iii) as described above, and further, which contains (viii) long chain blanches having at least 6 carbon atoms, as measured by NMR, the number of said long chain blanches being not more than 3 per 1,000 carbon atoms, in the case where the copolymerized $\alpha$-olefin has not more than 7 carbon atoms.

The packaging films according to the present invention can suitably be used, for example, as a shrink packaging film, a stretch packaging film and a sealant film, as well as a pouch and an inner container for bag-in-box.

The present invention also provides a shrink packaging film having a thickness of 20 to 100 $\mu$m and formed from one or more layers, wherein at least one layer of said film comprises an ethylene/$\alpha$-olefin copolymer (A) as described above, and is molded by a blown-film extrusion process under the following conditions:

the ratio of the tubular film diameter/the die lip diameter is 3.5 to 5;
the whitening height is 1 to 5 times the die lip diameter; and
the melt flow rate (MFR (g/10 min)) of the resin, the resin pressure P (kg/cm$^2$), the resin temperature T ($^\circ$C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} .$$

The ethylene/$\alpha$-olefin copolymer (A) constituting the shrink packaging film according to the present invention may be blended with a high-pressure low-density polyethylene (B) in an amount of not more than 80% by weight. The shrink packaging film may also be a multilayered film in which the molecules are orientated monoaxially or biaxially.

The present invention further provides a stretch packaging film formed from one or more layers,

wherein at least one layer of said film comprises an ethylene/$\alpha$-olefin copolymer (A) as described above, and is molded under the following conditions:

the melt flow rate (MFR (g/10 min)) of the resin, the resin pressure P (kg/cm$^2$), the resin temperature T ($^\circ$C), the resin throughput K (kg/hr), the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} .$$

The present invention still further provides a sealant film formed from one or more layers,

wherein at least one layer of said film is a sealant layer comprising an ethylene/$\alpha$-olefin copolymer (A) as described above, and is molded under the following conditions:

the melt flow rate (MFR (g/10 min)) of the resin, the resin pressure P (kg/cm$^2$), the resin temperature T ($^\circ$C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} .$$

The sealant film according to the present invention may have at least one layer in which the molecules are orientated monoaxially or biaxially. It is preferred that the ethylene/$\alpha$-olefin copolymer (A) has a melt flow rate (ASTM D 1238, 190 $^\circ$C, load of 2.16 kg) of 0.01 to 100 g/10 min. The ethylene/$\alpha$-olefin copolymer (A) may be blended with a high-pressure lowdensity polyethylene (B) in an amount of not more than 80% by weight. The sealant layer may be a film layer obtained by a cast molding process or blown-film extrusion process. The sealant film according to the present invention can suitably be used as a pouch film.

Thus, the present invention also provides a pouch formed from a sealant film according to the invention.

The present invention provides another sealant film formed from two or more layers which are molded by an extrusion lamination molding process,

wherein at least one layer of said film is a sealant layer comprising an ethylene/$\alpha$-olefin copolymer (A) as described above having a melt flow rate (ASTM D 1238, 190 °C, load of 2.16 kg) of 3 to 50 g/10 min, and
said at least one layer is molded under the following conditions:
the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} .$$

The present invention still further provides a polyethylene resin inner container for bag-in-box formed from a film of an ethylene/$\alpha$-olefin copolymer (A) as described above,

wherein the film is molded under the following conditions:
the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} ,$$

wherein the wall of the inner container is formed from a polyethylene resin film having a thickness of 30 to 1,000 $\mu$m, and has the following properties:

(1) the blocking force is less than 1.0 g/cm;
(2) the number of pinholes produced in an area of 20.5 cm $\times$ 28.0 cm after repeated torsion of 2,000 times is applied to the film by means of a Gelbo flex tester at -5 °C is not more than 10; and
(3) the number of flexings, as measured in accordance with JIS P-8115 at a measuring temperature of -5 °C, is not less than 10,000, and

wherein the inner container is capable of being repeatedly filled with a fluid material and emptied and folded upon itself without failure.

As used in the present specification, the term "film" may include both a multilayered film formed from two or more layers and a monolayered film formed from one layer.

BRIEF DESCRIPTION OF THE DRAWINGS

Fig. 1 is a perspective view of an embodiment of the polyethylene resin inner container for bag-in-box; and
Fig. 2 is a perspective view of the inner container as shown in Fig.1 in the folded state,

where 1 denotes a heat sealed portion, 2 to 7 denote corner portions, 10 denotes an inner container and 20 denotes a cap.

DETAILED DESCRIPTION OF THE INVENTION

The packaging film and the use thereof according to the present invention will be described below in detail.
The packaging film of the present invention is formed from one or more layers, wherein at least one layer of said film comprises an ethylene/α-olefin copolymer (A). The packaging film is used as a shrink packaging film, a stretch packaging film and a sealant film, as well as a pouch and an inner container for bag-in-box.

Ethylene/α-olefin copolymer (A)

The ethylene/α-olefin copolymer (A) for use in the present invention is a linear (low-density) polyethylene, and comprises ethylene and an α-olefin having 3 to 20 carbon atoms.

The ethylene/α-olefin copolymer (A) generally has a content of constituent units derived from ethylene (ethylene content) of 65 to 99 % by weight, preferably 70 to 98 % by weight, more preferably 75 to 96 % by weight, and a content of constituent units derived from an α-olefin of 3 to 20 carbon atoms (α-olefin content) of 1 to 35 % by weight, preferably 2 to 30 % by weight, more preferably 4 to 25 % by weight.

The composition of the ethylene/α-olefin copolymer is usually determined by measuring a $^{13}$C-NMR spectrum of a sample prepared by homogeneously dissolving about 200 mg of a copolymer in 1 ml of hexachlorobutadiene in a 10 mmØ (diameter) sample tube under the conditions of a measuring temperature of 120 °C, a measuring frequency of 25.05 MHz, a spectrum width of 1,500 Hz, a pulse repetition time of 4.2 sec and a pulse width of 6 µsec.

The α-olefins of 3 to 20 carbon atoms include, for example, propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene.

It is desirable that the ethylene/α-olefin copolymer (A) has, though depending on its specific use, a density (d: ASTM D 1505) generally in the range of 0.850 to 0.980 g/cm$^3$, preferably 0.890 to 0.960 g/cm$^3$, more preferably 0.895 to 0.940 g/cm$^3$.

It is also desirable that the ethylene/α-olefin copolymer (A) has a melt flow rate (MFR: ASTM D 1238, 190°C, a load of 2.16 kg) in the range of 0.01 to 100 g/10 min, and though depending on its specific use, generally 0.05 to 50 g/10 min, preferably 0.1 to 20 g/10 min, more preferably 0.5 to 15 g/10 min.

In the ethylene/α-olefin copolymer (A) for use in the present invention,

(i) the melt tension (MT (g)) at 190 °C and the melt flow rate (MFR (g/10 min)) satisfy the following relation:

$$MT > 2.2 \times MFR^{-0.84},$$

preferably $5.5 \times MFR^{-0.65} > MT > 2.2 \times MFR^{-0.84}$.

The ethylene/α-olefin copolymer (A) satisfying such a relation has a higher melt tension for its molecular weight, so that it exhibits good moldability.

The melt tension (MT) of the ethylene/α-olefin copolymer (A) is determined by measuring a stress applied to the film when a molten sample is stretched at a constant rate. Specifically, in the present invention, the MT of a molten sample (ethylene/α-olefin copolymer) is measured by the use of an MT measuring machine (manufactured by Toyo Seiki Seisakusho K.K.) under the conditions of a resin temperature of 190 °C, a resin extrusion rate of 15 mm/min, a take-up rate of 10 to 20 m/min, a nozzle diameter of 2.09 mmØ and a nozzle length of 8 mm.

Also, in the ethylene/α-olefin copolymer (A) for use in the present invention,

(ii) the quantity fraction (W (% by weight)) of n-decane-soluble component at room temperature (23 °C) and the density (d (g/cm$^3$)) satisfy the following relation:

in the case of MFR ≤ 10 g/10 min:

$$W < 80 \times \exp(-100(d-0.88)) + 0.1,$$

preferably W < 60 × exp(-100(d-0.88)) + 0.1, and
more preferably W < 40 × exp(-100(d-0.88)) + 0.1, and

in the case of MFR > 10 g/10 min:

$$W < 80 \times (MFR-9)^{0.26} \times \exp(-100(d-0.88)) + 0.1.$$

It can be said that the ethylene/α-olefin copolymer (A) satisfying such a relation has a narrow composition distribution.

The quantity fraction (W (% by weight)) of n-decane-soluble component is measured in the following manner. About 3 g of an ethylene/α-olefin copolymer is added to 450 ml of n-decane, dissolved therein at 145 °C and cooled to room temperature. Then, the n-decane-insoluble portion is removed by filtration, and the n-decane-soluble portion is recovered from the filtrate. The less the quantity fraction (W) of n-decane-soluble component is, the narrower the composition distribution is.

Further, in the ethylene/α-olefin copolymer (A),

(iii) the temperature (Tm (°C)) at maximum peak position in an endothermic curve as measured by a differential scanning calorimeter (DSC) and the density (d (g/cm$^3$)) satisfy the following relation:

$$Tm < 400 \times d - 248,$$

preferably

$$Tm < 450 \times d - 296.$$

Since the ethylene/α-olefin copolymer (A) satisfying such a relation has a lower Tm for its density, it exhibits excellent heat-sealing properties as compared to an ethylene/α-olefin copolymer having the same density.

Further, it can be said that the ethylene/a-olefin copolymer (A), which satisfies the above-mentioned relation between the temperature (Tm) at maximum peak position in an endothermic curve as measured by a differential scanning calorimeter (DSC) and the density (d), and also the above-mentioned relation between the quantity fraction (W) of n-decane-soluble component and the density (d), has a narrow composition distribution.

The Tm of the ethylene/α-olefin copolymer (A) is found out from an endothermic curve which is obtained by heating a sample of about 5 mg up to 200 °C at a rate of 10 °C/min in an aluminum pan, maintaining the sample at 200 °C for 5 minutes, cooling it to room temperature at a rate of 10 °C/min and heating it at a rate of 10 °C/min. The measurement is carried out by the use of an apparatus of DSC-7 model manufactured by Perkin Elmer Co.

As the ethylene/α-olefin copolymers (A) for use in the present invention, preferred are the following copolymers:

(1) An ethylene/α-olefin copolymer (A) which satisfies the relations (i), (ii) and (iii) as described above, and further, which has (iv) at least two peaks in the endothermic curve as measured by a differential scanning calorimeter (DSC).
(2) An ethylene/α-olefin copolymer (A) which satisfies the relations (i), (ii) and (iii) described above, and further, which contains (v) a non-eluting fraction at a temperature of lower than 100 °C, as measured by a temperature rise elution test (TREF), in an amount of not more than 10 % based on the total amount of the copolymer.
(3) An ethylene/α-olefin copolymer (A) which satisfies the relations (i), (ii) and (iii) as described above, and further, which contains (vi) long chain blanches having at least 6 carbon atoms, as measured by NMR, the number of said long chain blanches being more than 3 per 1,000 carbon atoms in the molecule, and especially an ethylene/α-olefin copolymer (A) which satisfies the relations (i), (ii) and (iii) as described above, and further, which contains (vii) long chain blanches having at least 6 carbon atoms, as measured by NMR, the number of said long chain blanches being more than 3 per 1,000 carbon atoms in the molecule, in the case where the copolymerized α-olefin has more than 7 carbon atoms.
(4) An ethylene/α-olefin copolymer (A) which satisfies the relations (i), (ii) and (iii) as described above, and further, which contains (viii) long chain blanches having at least 6 carbon atoms, as measured by NMR, the number of said long chain blanches being not more than 3 per 1,000 carbon atoms in the molecule, in the case where the copolymerized α-olefin has not more than 7 carbon atoms.

The above-mentioned temperature rise elution test (TREF) is carried out in the following manner.

A sample solution is applied to a column at 140 °C, and the column is then cooled to 25 °C at a cooling rate of 10 °C/hr. Thereafter, a component, which is continuously eluted at a constant flow rate of 1.0 ml while heating the column at a temperature rise rate of 15 °C/hr, is detected online.

Further conditions used in this test are as follows:

Column: 2.14 cm∅ × 15 cm;
Filling material: 100 μm∅ glass beads;
Solvent: o-dichlorobenzene;
Sample concentration: 200 mg/40 ml (o-dichlorobenzene); and
Sample solution amount applied: 7.5 ml.

The number of branches in the ethylene/α-olefin copolymer is determined by a $^{13}$C-NMR. Specifically, about 250 mg of a film is homogeneously dissolved in 2.5 ml of o-dichlorobenzene/deuterated benzene (4/1 (by volume)) in a 10 mm⌀ sample tube, to obtain a sample. A $^{13}$C-NMR spectrum of the sample is measured by a proton full decoupling method under the conditions of an observation frequency of 125.8 MHz, an observation area of 33,900 Hz, a pulse width of 45°, a pulse repetition time of 5.5 sec, a measuring temperature of 120 °C and an integration number of 10,000. The number of branches is determined in accordance with a method described in the document "JMS-REV. Macromol. Chem. Phys." (C29 (2&3), 201-317 (1989)).

The number of long chain branches having at least 6 carbon atoms in the ethylene/α-olefin copolymer is also determined by a $^{13}$C-NMR. Specifically, about 250 mg of a film is homogeneously dissolved in 2.5 ml of o-dichlorobenzene/deuterated benzene (4/1 (by volume)) in a 10 mm⌀ sample tube, to obtain a sample. A $^{13}$C-NMR spectrum of the sample is measured by a proton full decoupling method under the conditions of an observation frequency of 125.8 MHz, an observation area of 33,900 Hz, a pulse width of 45°, a pulse repetition time of 5.5 sec, a measuring temperature of 120 °C and an integration number of 10,000. The number of long chain branches is determined in accordance with a method described in the document "JMS-REV. Macromol. Chem. Phys." (C29 (2&3), 201-317 (1989)) on the basis of origin of signals.

The number of long chain branches having at least 6 carbon atoms is defined as a value obtained by reducing the number of branches, which is calculated from methyl and methylene carbon atoms based on each of branches other than long chain branches having at least 6 carbon atoms, from the total number of branches, which is calculated from a sum of methine carbon atoms.

The above-mentioned ethylene/α-olefin copolymer (A) can be prepared by copolymerizing ethylene and an α-olefin of 3 to 20 carbon atoms in the presence of metallocene type olefin polymerization catalysts comprising a metallocene catalyst component disclosed, for example, in JP-A-4-213309, JP-A-6-9724, JP-A-6-206939, JP-A-9-235312, JP-A-10-251334, JP-A-10-251335, JP-A-2-276807, W093/0822 and JP-A-11-322852.

Such a metallocene type olefin polymerization catalyst is generally formed from a metallocene catalyst component comprising a transition metal compound of Group IVB of the periodic table, which has at least one ligand having a cyclopentadienyl skeleton, and an organoaluminum-oxy compound catalyst component, and optionally a carrier, an organoaluminum compound catalyst component and an ionizing ionic compound catalyst component.

Processes for preparing the metallocene type olefin polymerization catalyst and the ethylene/α-olefin copolymer (A) are described in detail, for example, in JP-A-4-213309, JP-A-6-9724, JP-A-6-206939, JP-A-9-235312, JP-A-10-251334, JP-A-10-251335, JP-A-2-276807, W093/0822 and JP-A-11-322852.

Packaging film

The packaging film according to the present invention is a packaging film formed from one or more layers, wherein at least one layer of said film comprises the above-mentioned ethylene/a-olefin copolymer (A), and is molded under the following conditions:

the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} .$$

When the above-mentioned specific ethylene/α-olefin copolymer (A) is used and subjected to film molding under the above-mentioned conditions, the film moldability is more excellent as compared to conventional film molding processes.

The above-mentioned ethylene/α-olefin copolymer (A) and packaging film molded therefrom can suitably be used, for example, as a shrink packaging film, a stretch packaging film, a meld bag film, and a sealant film, and further a meld bag, a pouch and an inner containers for bag-in-box.

Shrink packaging film

The shrink packaging film according to the present invention is one embodiment of the above-mentioned packaging films. The shrink packaging film is a film having a thickness of 20 to 100 μm, which is formed from one or more layers, wherein at least one layer of said film comprises an ethylene/α-olefin copolymer (A) as described above, and is molded by a blown-film extrusion process under the following conditions:

the ratio of the tubular film diameter/the die lip diameter is 3.5 to 5;

the whitening height is 1 to 5 times the die lip diameter; and

the melt flow rate (MFR (g/10 min)) of the resin, the resin pressure P (kg/cm$^2$), the resin temperature T ($^\circ$C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2} .$$

When the ethylene/$\alpha$-olefin copolymer (A), which has a higher melt tension as compared to other conventional linear low-density polyethylenes, is used and is subjected to film molding under the above-mentioned film molding conditions, a heat shrinkable film, which have higher strength as compared to conventional polyethylene shrinkable films, can be obtained.

It is desirable that the above-mentioned ethylene/$\alpha$-olefin copolymer (A) for use in molding a shrink packaging film has a density (d: ASTM D 1505) in the range of 0.895 to 0.930 g/cm$^3$, preferably 0.900 to 0.925 g/cm$^3$, more preferably 0.900 to 0.920 g/cm$^3$, and has a melt flow rate (MFR: ASTM D 1238, 190 $^\circ$C, a load of 2.16 kg) in the range of 0.01 to 10 g/10 min, preferably 0.05 to 5 g/10 min, more preferably 0.1 to 5 g/10 min.

The ethylene/$\alpha$-olefin copolymer (A) for constituting the shrink packaging film may be blended with a high-pressure low-density polyethylene (B) in an amount of not more than 80% by weight, preferably 70 to 0 % by weight, more preferable 50 to 0 % by weight.

The high-pressure low-density polyethylene (B) is a polyethylene prepared in the presence of a radical polymerization catalyst at a high pressure, and may optionally contain any other copolymerized vinyl monomer in a small amount.

The high-pressure low-density polyethylene (B) for use in the present invention has a density (ASTM D 1505) in the range of generally 0.917 to 0.930 g/cm$^3$, preferably 0.917 to 0.925 g/cm$^3$. The high-pressure low-density polyethylene (B) having such a range of density exhibits excellent moldability in blown-film extrusion.

The density is measured in a gradient density tube, in which extruded strands obtained in the measurement of melt flow rate (MFR) at 190 $^\circ$C under a load of 2.16 kg are heat treated at 100 $^\circ$C for 1 hour, slowly cooled to room temperature over a period of 1 hour, and then the density is determined.

The high-pressure low-density polyethylene (B) has a melt flow rate (MFR: ASTM D 1238, 190 $^\circ$C, a load of 2.16 kg) in the range of generally 0.1 to 3 g/10 min, preferably 0.1 to 1.0 g/10 min. The high-pressure low-density polyethylene (B) having such a range of melt flow rate exhibits excellent moldability in blown-film extrusion.

To the ethylene/$\alpha$-olefin copolymer (A), may optionally be added, besides the above-mentioned high-pressure low-density polyethylene (B), conventionally known additives, such as slip agents, anti-blocking agents, antistatic agents, weathering stabilizers, heat stabilizers, anti-fogging agents, pigments, dyes and fillers within limits not prejudicial of the object of the present invention.

These resin compositions can be obtained by mixing or melt kneading the ethylene/$\alpha$-olefin copolymer (A), and optionally the high-pressure low-density polyethylene (B) and the above-mentioned additives according to conventionally known methods.

When the ethylene/$\alpha$-olefin copolymer (A) is subjected to blown-film extrusion under the above-mentioned molding conditions, a heat shrinkable film, which has a heat shrink degree enough to be used for shrink packaging and an excellent dart impact strength, can be obtained.

The shrink packaging film according to the present invention may be a multilayered film in which the molecules are orientated monoaxially or biaxially, i.e., in at least one of the machine direction (MD) and the transverse direction (TD).

The multilayered films in which the molecules are orientated can be obtained in such a manner that the ethylene/$\alpha$-olefin copolymer (A) is molded by the above-mentioned blown-film extrusion process, the resulting film is reheated, optionally after electron radiation crosslinking, and is orientated monoaxially or biaxially. Generally, it is known that if the orientation of an LLDPE polymer is effected after electron radiation crosslinking, their orientation suitability is improved. As for compositions containing a metallocene catalyzed LLDPE polymer, in particular of low density (not more than 0.920 g/cm$^3$), the efficiency of electron radiation crosslinking is improved, so that the orientation suitability is further improved.

For the orientation, any conventionally known orientation processes can be employed, for example a monoaxial orientation process by the use of a tenter stretching machine and a biaxial co-orientation process according to blown-film extrusion. The biaxial co-orientation processes include, for example, a flat biaxial co-orientation by the use of a combination of a roll stretching machine and a tenter stretching machine.

The blown-up ratio is generally 3 to 10 times and preferably 4 to 9 times, in each of the lengthwise direction and the crosswise direction. When the orientation is carried out at the above-mentioned blow-up ratio, a polyethylene film in which molecules are well orientated and has enough heat-shrinkage by heat treatment can be obtained without occurrence of breakage of the film by the orientation.

These multilayered films in which molecules are monoaxially or biaxially orientated as obtained above have a higher heat shrink degree, so that they are suited for shrink packaging.

In the case where the shrink packaging film according to the present invention is a multilayered film of two or more layers, at least one surface of the film layer made of the above-mentioned ethylene/α-olefin copolymer (A) may be laminated with a further layer, such as an ethylene/vinyl alcohol copolymer layer, by co-extrusion or post-lamination, in order to provide the film with added values, such as low-temperature heat sealing properties, transparency, gas permeation resistance and oil resistance.

The shrink packaging film according to the present invention is excellent in heat shrinking properties at low temperatures together with other excellent properties, and can fit to various configurations, so that it can widely be used not only for commercial packaging, for example, of foods and other daily necessaries such as miscellaneous goods, but also for industrial packaging of industrial products.

Stretch packaging film

The stretch packaging film according to the present invention is a film which is formed from one or more layers, wherein at least one of said layers comprises the ethylene/α-olefin copolymer (A) as described above.

It is desirable that the ethylene/a-olefin copolymer (A) for use in molding a stretch packaging film has a density (d: ASTM D 1505) in the range of 0.895 to 0.930 g/cm$^3$, preferably 0.900 to 0.925 g/cm$^3$, more preferably 0.900 to 0.920 g/cm$^3$, and has a melt flow rate (MFR: ASTM D 1238, 190 °C, a load of 2.16 kg) in the range of 0.5 to 10 g/10 min, preferably 1.0 to 7.0 g/10 min, more preferably 1.0 to 5.0 g/10 min.

The ethylene/α-olefin copolymer (A) may optionally be compounded with other resin components within limits not prejudicial of the object of the present invention.

Such other resin components include, for example, a high-pressure low-density polyethylene having a density (ASTM D 1505) of 0.915 to 0.924 g/cm$^3$. Such other resin components may be used in an amount of 0 to 40 parts by weight based on 100 parts by weight of the ethylene/α-olefin copolymer (A).

To the ethylene/α-olefin copolymer (A), may optionally be added, besides the above-mentioned other resin components, various additives, such as slip agents, anti-blocking agents, anti-fogging agents, antistatic agents, and further ultraviolet light protecting agents to protect contents within limits not prejudicial of the object of the present invention.

Preferably used as the slip agents are, for example, higher fatty acid amides, such as oleic acid amides, stearic acid amides and erucic acid amides.

Preferably used as the anti-blocking agents are, for example, inorganic substances such as silica and talc.

Preferably used as the antistatic agents are, for example, glycerol fatty acid esters and sorbitol fatty acid esters.

At least one layer of the stretch packaging film can be produced from the ethylene/α-olefin copolymer (A) by conventional film molding processes such as a blown-film extrusion process and a T-die extrusion process, with the proviso that the ethylene/α-olefin copolymer (A) is molded under the following conditions:

the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T\text{-}120)/A^{0.2}]^{0.2} \leq P$$

$$\leq 450 \times [K/(MFR^{1.5})/(T\text{-}120)/A^{0.2}]^{0.2}.$$

When the ethylene/α-olefin copolymer (A) is molded by the cast film molding or the blown-film extrusion under the above-mentioned conditions, a stretchable film can continuously be produced for a long period of time, and there is no need to take apart and clean dies and extruders as before.

The multilayered stretch packaging film can be produced by the use of conventional molding machines, such as a blown-film extruder equipped with a plurality of die lips or a T-die molding machine.

The multilayered stretch packaging film, for example, one having an adhesive surface and a non-adhesive surface, can be obtained, for example, in the following manner. On one surface of a film layer made of the ethylene/α-olefin copolymer (A) for use in the present invention as an intermediate layer, a film layer, as a non-adhesive layer, which is formed from a linear low-density polyethylene having a density higher than that of the ethylene/α-olefin copolymer (A), is formed, and on the other surface of the intermediate layer, a film layer, as an adhesive layer, which is formed from a resin composition of the ethylene/α-olefin copolymer (A) and 2 to 10 % by weight of an other resin, such as an ethylene/vinyl acetate copolymer (EVA) containing 10 to 20 % by weight of vinyl acetate, a liquid polyisobutylene or a liquid polybutadiene, is formed. The thickness of the non-adhesive layer may be about 5 to 30 % based on the total thickness of the resulting packaging film. The thickness of the adhesive layer may also be about 5 to 30 % based on the total thickness of the resulting packaging film.

To the ethylene/α-olefin copolymer (A) constituting the intermediate layer, may optionally be added additives such as adhesives and weathering stabilizers within limits not prejudicial of the object of the present invention.

The stretch packaging film according to the present invention generally has, though depending on contents to be packaged, a thickness of 10 to 50 μm. When the stretch packaging film is formed from three layers, an inner layer in contact with a content packaged by the film, an intermediate layer and an outer layer in contact with atmosphere, the ratio between these layers is generally 1:3:1 to 1:1:1 (inner layer : intermediate layer : outer layer).

Sealant film and pouch

The sealant film according to the present invention is a film which is formed from one or more layers, wherein at least one layer of said film comprises an ethylene/α-olefin copolymer (A) as described above, and is molded under the following conditions:

the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T-120)/A^{0.2}]^{0.2} \leq P$$

$$\leq 450 \times [K/(MFR^{1.5})/(T-120)/A^{0.2}]^{0.2} .$$

As the above-mentioned ethylene/α-olefin copolymer (A) for use in molding a sealant film, it is desirable that the copolymer has a density (d: ASTM D 1505) in the range of 0.890 to 0.945 g/cm$^3$, preferably 0.895 to 0.930 g/cm$^3$, more preferably 0.905 to 0.920 g/cm$^3$, and has a melt flow rate (MFR: ASTM D 1238, 190 °C, a load of 2.16 kg) in the range of 0.5 to 100 g/10 min, preferably 1.0 to 10 g/10 min, more preferably 1.0 to 5.0 g/10 min.

The sealant layer can be molded by a cast film molding process or a blown-film extrusion process.

The sealant film according to the present invention may have at least one layer in which the molecules are orientated monoaxially or biaxially, i.e., in at least one of the machine direction (MD) and the transverse direction (TD).

The film layer in which the molecules are orientated can be obtained, for example in such a manner that the ethylene/α-olefin copolymer (A) is melted and molded by the blown-film extrusion process or the cast film molding process, and then the resulting film is orientated.

For the orientation, any conventionally known orientation processes can be employed, for example a monoaxial orientation process using a tenter stretching machine and a biaxial co-orientation process according to blown-film extrusion. The biaxial co-orientation processes include, for example, a flat biaxial co-orientation by the use of a combination of a roll stretching machine and a tenter stretching machine.

The blown-up ratio is generally 1.1 to 50 times, preferably 1.1 to 5 times, in each of the lengthwise direction and the crosswise direction.

The sealant film according to the present invention formed from two or more layers is laminated with a film layer made of, for example a polyamide resin, a polypropylene, a linear low-density polyethylene or a high-pressure low-density polyethylene. For the lamination, employable is a cast co-extrusion molding process or a blown-film co-extrusion process, and also a dry lamination process and an extrusion laminating process.

It is preferred that the above-mentioned ethylene/a-olefin copolymer (A) has a melt flow rate (ASTM D 1238, 190 °C, load of 2.16 kg) of 0.01 to 100 g/10 min. The ethylene/α-olefin copolymer (A) may be blended with the high-pressure low-density polyethylene (B) in an amount of not more than 80 % by weight, preferably 40 to 0 % by weight, more preferably 20 to 0 % by weight.

The sealant film according to the present invention are suitably used for a pouch film.

Thus, the pouch according to the invention is formed from such a sealant film.

Another sealant film according to the present invention is an embodiment of the above-mentioned packaging films according to the invention. Such another sealant film is a film having two or more layers, which are molded by an extrusion laminating process, wherein at least one layer of said film is a sealant layer comprising an ethylene/α-olefin copolymer (A) having a melt flow rate (ASTM D 1238, 190 °C, load of 2.16 kg) of 3 to 50 g/10 min, and is molded under the following conditions:

the melt flow rate (MFR (g/10 min)) of the resin, the resin pressure P (kg/cm$^2$), the resin temperature T (°C), the resin throughput K (kg/hr) and the lip sectional area A (cm$^2$) of a film molding machine satisfy the following relation:

$$200 \times [K/(MFR^{1.5})/(T-120)/A^{0.2}]^{0.2} \leq P$$

$$\leq 450 \times [K/(MFR^{1.5})/(T-120)/A^{0.2}]^{0.2} .$$

The ethylene/α-olefin copolymer (A) may be blended with the above-mentioned high-pressure low-density polyethylene (B) in an amount of not more than 80 % by weight, preferably 40 to 0 % by weight, and more preferably 20 to 0 % by weight.

A film layer to be provided on one surface of the sealant layer may be made of, for example a polyamide resin, a polypropylene, a linear low-density polyethylene or a high-pressure low-density polyethylene.

The another sealant film according to the present invention is also suitably used for a pouch film. They can be used, for example, for a packaging pouch of liquid soup such as Chinese noodle soup and of poultice.

Polyethylene resin inner container for bag-in-box

The polyethylene resin inner container for bag-in-box according to the present invention is a polyethylene resin inner container for bag-in-box wherein the inner container is formed from a film of the above-mentioned ethylene/α-olefin copolymer (A).

As the ethylene/α-olefin copolymer (A) for use in molding the above-mentioned film, desirable is a copolymer which has a density (d: ASTM D 1505) in the range of 0.900 to 0.940 $g/cm^3$, preferably 0.905 to 0.935 $g/cm^3$, more preferably 0.910 to 0.930 $g/cm^3$, and has a melt flow rate (MFR: ASTM D 1238, 190 °C, a load of 2.16 kg) in the range of 0.3 to 10 g/10 min, preferably 0.5 to 7 g/10 min, and more preferably 0.5 to 5 g/10 min.

The film is molded from the ethylene/α-olefin copolymer (A) under the following conditions:

the melt flow rate (MFR (g/10 min)) of the resin, the resin pressure P ($kg/cm^2$), the resin of temperature T (°C), the resin throughput K (kg/hr) and the lip sectional area A ($cm^2$) of a film molding machine satisfy the following relation:

$$200 \times [K/(MFR^{1.5})/(T-120)/A^{0.2}]^{0.2} \leq P$$

$$\leq 450 \times [K/(MFR^{1.5})/(T-120)/A^{0.2}]^{0.2} .$$

To the ethylene/α-olefin copolymer (A), may optionally be added additives, such as weathering stabilizers, heat stabilizers, antistatic agents, anti-slip agents, anti-blocking agents, anti-fogging agents, lubricants, pigments, dyes, nucleating agents, plasticizers, anti-aging agents, hydrochloric acid absorbers and antioxidants, within limits not prejudicial of the object of the present invention.

The thickness of the film for forming the inner container for bag-in-box according to the present invention varies depending on the content of the container and the production process of the container, and is generally 30 to 1,000 μm, and preferably 50 to 700 μm.

The film for forming the inner container for bag-in-box according to the present invention has the following properties:

(1) the blocking force is less than 1.0 g/cm;
(2) the number of pinholes produced in an area of 20.5 cm $\times$ 28.0 cm after repeated torsion of 2,000 times is applied to the film by means of a Gelbo flex tester at -5 °C is not more than 10; and
(3) the number of flexings, as measured in accordance with JIS P-8115 at -5 °C , is not less than 10,000.

In addition, the neck-in of the film during the film molding process is preferably not more than 20 cm on one side.

The structure of the polyethylene resin inner container for bag-in-box may be a monolayered film of the above-mentioned ethylene/α-olefin copolymer (A) or may be a multilayered film in which a film layer of the ethylene/α-olefin copolymer (A) and other film layer(s) of a different resin (such as a nylon, an ethylene/vinyl alcohol copolymer resin (EVOH), a polyvinyl alcohol or an adhesive resin) are laminated together.

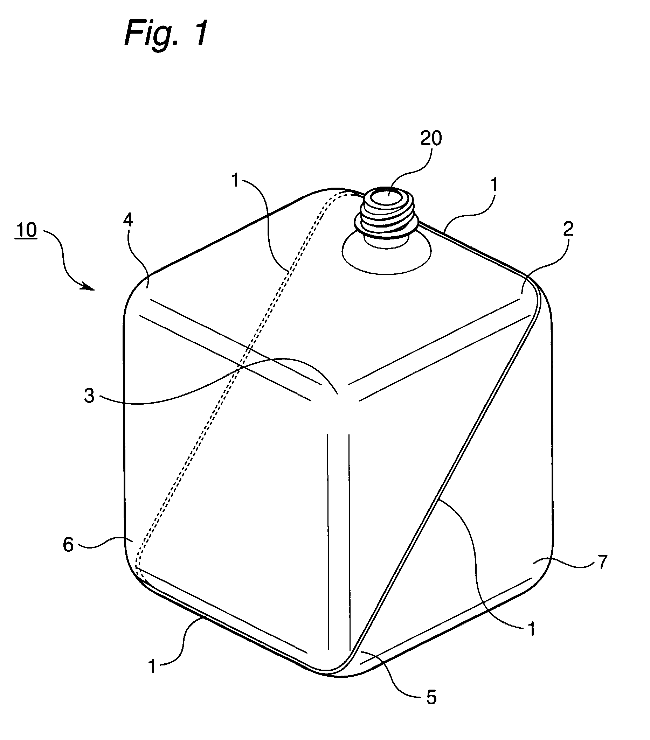

An example of the polyethylene resin inner containers for bag-in-box is shown in Fig. 1 which is a perspective view of the inner container 10. The inner container 10 generally has an approximately cubic shape and a polyethylene resin cap 20 is provided on its upper end by welding. A thick heat-sealed portion 1 is present at the position corresponding to a periphery of a cut line when the cube is cut diagonally into halves. The heat-sealing portion 1 can be formed by welding the resin at the facing portions of halves of the mold during the inner container is blown molded or vacuum molded.

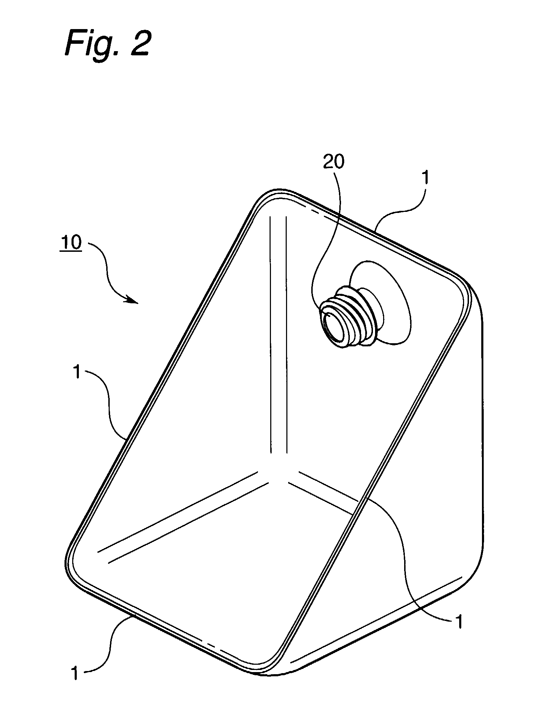

Fig. 2 shows the inner container 10 in the folded state where at the heat-sealed portion 1 as shown in Fig. 1 the upper-left half of the inner container is tucked into the lower-right half thereof.

In the form shown in Fig. 1, the inner container is filled with a liquid, placed in a hard outer container and stored or transported. On the other hand, the emptied inner container itself is stored or transported in the form as shown in Fig. 2.

Thus, when the inner container is folded, swollen to be cubic shape or transported with a filled content therein, various loads are applied to corner portions 2, 3, 4, 5, 6, 7 and the like of the inner container. Therefore, these corner portions suffer for much severer stress than that applied to a common flat bag, so that pinholes are apt to be brought about. For this reason, the inner container requires excellent performance, such as high anti-pinhole properties, flex resistance and anti-blocking properties.

The inner container for bag-in-box according to the present invention meets the above required properties, so that it is capable of being repeatedly filled with a fluid and emptied and folded without failure.

The polyethylene resin inner container for bag-in-box (BIB) according to the present invention can be produced by, for example, the following processes.

(i) A molten polyethylene resin is extruded into two sheets from T-dies arranged in parallel with each other in the lengthwise direction, followed by vacuum molding by the use of a mold having such a shape that peripheries of halves of the resulting inner container can be joined with their diagonals.

(ii) A molten polyethylene resin is extruded from a circular die (parison extrusion) into a cylindrical form, followed by hollow molding using the same mold as mentioned above.

(iii) Two or more polyethylene resin films superposed one upon another are heat-sealed at their four sides to form a bag. In this process, each of the films may be a monolayered film made of the polyethylene resin (ethylene/$\alpha$-olefin copolymer (A)) or a multi-layered film consisting of a layer of the polyethylene resin and a layer of a different resin (e.g., a nylon, an ethylene/vinyl alcohol copolymer resin (EVOH), a polyvinyl alcohol or an adhesive resin).

EFFECT OF THE INVENTION

According to the present invention, excellent packaging films are provided, specifically,

(1) a shrink packaging film made of a shrinkable film which can be molded by blown-film extrusion at a high blow-up ratio, and which has not only a heat shrink degree enough to be used for shrink packaging, but also excellent dart impact strength;

(2) a stretch packaging film made of a stretchable film which can continuously be produced by cast film molding or blown-film extrusion molding; and

(3) a sealant film which can be produced at a high production speed with decreased neck-in of the film, without impairing excellent film mechanical characteristics and sealing characteristics owned by a metallocene catalyzed linear low-density polyethylene (M-LLDPE).

Further, according to the present invention, an inner container for bag-in-box, which can be produced from a film of an ethylene/$\alpha$-olefin copolymer (A) having excellent moldability.

EXAMPLE

The present invention will further be illustrated below with reference to the following Examples which in no way limit the scope of the invention.

(1) Granulation of ethylene copolymer

100 parts by weight of an ethylene copolymer is blended with 0.05 part by weight of tri(2,4-di-t-butylphenyl) phosphate as a secondary antioxidant, 0.1 part by weight of n-octadecyl-3-(4'-hydroxy-3',5'-di-t-butylphenyl)propionate as a heat stabilizer and 0.05 part by weight of calcium stearate as a hydrochloric acid absorber. Then, the blend is melt extruded by a common extruder at a preset temperature of 180 °C, to prepare granular pellets.

(2) Density (d)

Strands obtained in the measurement of melt flow rate at 190 °C under a load of 2.16 kg are heat treated at 120 °C for 1 hour and slowly cooled to room temperature over a period of 1 hour. Then, the density of the copolymer is measured by a gradient density tube.

(3) Composition of copolymer

The composition of a copolymer is determined by $^{13}$C-NMR. That is, a $^{13}$C-NMR spectrum of a sample obtained by homogeneously dissolving about 200 mg of a copolymer powder in 1 ml of hexachlorobutadiene in a 10 mm$\varnothing$ sample tube is measured under the measuring conditions of a measuring temperature of 120 °C, a measuring frequency of 25.05 MHz, a spectrum width of 1,500 Hz, a pulse retention time of 4.2 sec and a pulse width of 6 μsec.

(4) Melt flow rate (MFR)

The melt flow rate (MFR) is determined in accordance with ASTM D 1238-65T under the conditions of a temperature of 190 °C and a load of 2.16 kg using granular pellets of a copolymer.

(5) Maximum peak temperature (Tm) by DSC

The measurement is carried out by the use of an apparatus of DSC-7 model manufactured by Perkin Elmer Co. The temperature (Tm) at maximum position is determined from an endothermic curve which is obtained by heating a sample of about 5 mg up to 200 °C at a rate of 10°C/min in an aluminum pan, maintaining the sample at 200 °C for 5 minutes, cooling it to room temperature at a rate of 10 °C/min and heating it at a rate of 10 °C/min.

(6) Quantity fraction (W) of n-decane-soluble component

The quantity fraction (W) of n-decane-soluble component in a copolymer is measured in the following manner. About 3 g of a copolymer is added to 450 ml of n-decane dissolved therein at 145 °C and cooled to 23 °C. Then, the n-decane-insoluble portion is removed by filtration and the n-decane-soluble portion is recovered from the filtrate.

The quantity fraction (W) of a n-decane-soluble component is defined by the following formula:

$$W (\%) = (W2/W1) \times 100,$$

where W1 is a total weight of n-decane-insoluble and n-decane-soluble portions, and W2 is a weight of n-decane-soluble portion. The smaller is the quantity fraction of n-decane-soluble component in a copolymer, the narrower is the composition distribution therein.

(7) Melt tension (MT)

The melt tension (MT) is determined by measuring a stress at the time when a molten polymer is stretched at a constant rate. That is, granular pellets of a copolymer are used as a sample to be measured, and the measurement is carried out by the use of a MT measuring machine (manufactured by Toyo Seiki Seisakusho K.K.) under the conditions of a resin temperature of 190 °C, an extrusion rate of 15 mm/min, a take-up rate of 10 to 20 m/min, a nozzle diameter of 2.09 mm and a nozzle length of 8 mm.

(8) Quantification of long chain branches (LCB)

The quantification of long chain branches (LCB) is carried out by a $^{13}$C-NMR as described above.

(9) Temperature rise elution test (TREF)

After a sample solution is applied to a column at 140 °C, the column is cooled to 25 °C at a cooling rate of 10 °C/hr. Thereafter, a component, which is continuously eluted at a constant flow rate of 1.0 ml/min while heating the column at a temperature rise rate of 15 °C/hr, is detected online.

Further conditions used in this test are a 2.14 cm∅ × 15 cm column; 100 μm∅ glass beads as a filling material; o-dichlorobenzene as a solvent; a sample concentration of 200 mg/40 ml (o-dichlorobenzene); and a sample solution amount applied of 7.5 ml.

Examples regarding shrink packaging films

Preparation Example 1

Preparation of ethylene/1-hexene copolymer [M-LLDPE (1)]

[Preparation of catalyst component]

In 121 liters of toluene, 7.9 kg of silica having been dried at 250 °C for 10 hours were suspended, and the suspension was cooled to 0 °C. Then, 41 liters of a toluene solution of methylaluminoxane (Al = 1.47 mol/l) were dropwise added over a period of 1 hour. During the addition, the temperature of the system was maintained at 0 °C. Subsequently, the reaction was performed at 0 °C for 30 minutes, and the temperature was then raised up to 95 °C over a period of 1.5 hours, followed by performing reaction at this temperature for 4 hours. Thereafter, the system was cooled to 60 °C, and the supernatant was removed by decantation. The solid thus obtained was washed twice with toluene and resuspended in 125 liters of toluene. To the system, 20 liters of a toluene solution of bis(1,3-dimethylcyclopentadienyl)zirconium dichloride (Zr = 28.4 mmol/l) was dropwise added at 30 °C over a period of 30 minutes, to perform reaction at 30 °C for 2 hours. Then, the supernatant was removed, and the remainder was washed twice with hexane to obtain a solid catalyst containing 4.6 mg of zirconium per 1 g of the catalyst.

[Preparation of prepolymerized catalyst]

To 160 liters of hexane containing 16 mol of triisobutylaluminum, 4.3 kg of the solid catalyst obtained above were added, and prepolymerization of ethylene was carried out at 35 °C for 3.5 hours. Thus, a prepolymerized catalyst, in which 3 g of an ethylene polymer per 1 g of the solid catalyst was produced by the prepolymerization, was obtained. The ethylene polymer had an intrinsic viscosity [η], as measured in decalin at 135 °C, of 1.27 dl/g.

[Polymerization]

In a continuous fluidized bed gas phase polymerization reactor, copolymerization of ethylene and 1-hexene was carried out under the conditions of a total pressure of 20 kg/cm$^2$-G and a polymerization temperature of 75 °C. In this copolymerization, to the system were continuously fed the above-prepared prepolymerized catalyst at a feed rate of 0.025 mmol/hr (in terms of zirconium atom) and triisobutylaluminum at a feed rate of 10 mmol/hr. In order to maintain the gas composition constant during the polymerization, ethylene, 1-hexene, hydrogen and nitrogen were continuously fed to the system (gas composition: 1-hexene/ethylene = 0.051, hydrogen/ethylene = $6.1 \times 10^{-4}$, ethylene concentration = 50 %).

The yield of an ethylene/1-hexene copolymer [M-LLDPE (1)] was 6.0 kg/hr. The copolymer had a density (d) of 0.910 g/cm$^3$, an MFR of 0.1 g/10 min, an MT of 17 g, a maximum peak temperature (Tm) of melting point by DSC of 111.5 °C, a quantity fraction (W) of n-decane-soluble component at 23 °C of 0.5 % by weight and an ethylene content of 89.0 % by weight. The properties of this copolymer [metallocene catalyzed linear low-density polyethylene: M-LLDPE (1)] are set forth in Table 1.

The ethylene/1-hexene copolymer [M-LLDPE (1)] was palletized by melt kneading.

Preparation Example 2

Preparation of ethylene/1-hexene copolymer [M-LLDPE (2)]

An ethylene/1-hexene copolymer [M-LLDPE (2)] having an ethylene content of 91.6 % by weight was prepared in the same manner as in Preparation Example 1, except that the gas composition was altered so as to obtain the copolymer [M-LLDPE (2)] which had density and MFR values as shown in Table 1.

The properties of the resulting ethylene/1-hexene copolymer [metallocene catalyzed linear low-density polyethylene: M-LLDPE (2)] are set forth in Table 1.

Preparation Example 3

Preparation of ethylene/1-hexene copolymer [M-LLDPE (3)]

An ethylene/1-hexene copolymer [M-LLDPE (3)] having an ethylene content of 89.8 % by weight was prepared in the same manner as in Preparation Example 1, except that the gas composition was altered so as to obtain the copolymer [M-LLDPE (3)] which had density and MFR values as shown in Table 1.

The properties of the resulting ethylene/1-hexene copolymer [metallocene catalyzed linear low-density polyethylene: M-LLDPE (3)] are set forth in Table 1.

Example A1

Using the ethylene/1-hexene copolymer obtained in Preparation Example 1 [M-LLDPE (1): ethylene content = 89.0 % by weight; density (ASTM D 1505)] = 0.910 g/cm$^3$; MFR (ASTM D 1238, 190 °C, a load of 2.16 kg) = 0.1 g/10 min; MT = 17 g; W = 0.5 % by weight; and Tm = 111.5 °C], a film having a thickness of 60 μm was molded by blown-film extrusion under the extrusion conditions as shown in Table 1 and under the following molding conditions.

[Blown-film extrusion conditions]

Blown-film extrusion machine

    50 mmØ Extruder manufactured by Modern
        Machinery Co.

Screw: L/D = 28
Compression ratio: 2.2
Die diameter: 100 mmø
Lip width: 2.0 mm

Film thickness: 60 µm
Preset temperature of extruder:
    Cylinder 170 °C, Die 190 °C
Blow-up ratio: 4.5
Take-up rate: 10 m/min

The film thus obtained was measured for its dart impact strength, tensile elongation in the lengthwise direction and heat-shrinkage degree by the following test methods. The results obtained are set forth in Table 1.

[Test methods]

(1) Dart impact strength

A value measured for a film in accordance with the method A of ASTM D 1709 was divided by a thickness of the film. The quotient thus obtained was taken as the dart impact strength.

(2) Tensile elongation

A tensile test was carried out by the use of a tensile tester of constant crosshead speed type (manufactured by Instron Co.) in the lengthwise direction of a film under the following conditions, to obtain a tensile elongation.

Specimen: JIS K 6781
Ambient temperature: 23 °C
Rate of pulling: 500 mm/min

(3) Heat-shrinkage degree

A square sample of 10 cm $\times$ 10 cm cut out from a film was immersed in a glycol solution at 120 °C for 5 seconds, and then the sample was measured for its length (L (cm)) of both height and width. The heat-shrinkage degree was calculated by the following formula:

$$\text{Heat-shrinkage degree(\%)} = [(10 - L)/L] \times 100.$$

Example A2

Using a blend of 70 parts by weight of the ethylene/1-hexene copolymer obtained in Preparation Example 2 [M-LLDPE (2): ethylene content = 91.6 % by weight; density (ASTM D 1505) = 0.915 g/cm$^3$; MFR (ASTM D 1238, 190 °C, load of 2.16 kg) = 0.5 g/10 min; MT = 6.0 g; W = 0.3 % by weight; and Tm = 112.4 °C], and 30 parts by weight of a high-pressure low-density polyethylene [MFR (ASTM D 1238, 190 °C, load of 2.16 kg) = 0.3 g/10 min; and density (ASTM D 1505)] = 0.921 g/cm$^3$], a film having a thickness of 60 µm was molded by blown-film extrusion under the extrusion conditions as shown in Table 1 and under the blown-film extrusion conditions as described in Example A1.
The film thus obtained was measured for its dart impact strength, tensile elongation in the lengthwise direction and heat-shrinkage degree by the test methods as described above. The results obtained are set forth in Table 1.

Example A3

Using a blend of 50 parts by weight of the ethylene/1-hexene copolymer obtained in Preparation Example 3 [M-LLDPE (3): ethylene content = 89.8 % by weight; density (ASTM D 1505) = 0.915 g/cm$^3$; MFR (ASTM D 1238, 190 °C, load of 2.16 kg) = 1.1 g/10 min; MT = 3.5 g; W = 0.3 % by weight; and Tm = 112.0 °C], and 50 parts by weight of the high-pressure low-density polyethylene obtained in Example A2, a film having a thickness of 60 µm was molded by blown-film extrusion under the extrusion conditions as shown in Table 1 and under the blown-film extrusion conditions as described in Example A1.

The film thus obtained was measured for its dart impact strength, tensile elongation in the lengthwise direction and heat-shrinkage degree by the test methods as described above. The results obtained are set forth in Table 1.

Comparative Example A1

Using the high-pressure low-density polyethylene obtained in Example A2, a film having a thickness of 60 μm was molded by blown-film extrusion under the extrusion conditions as shown in Table 1 and under the blown-film extrusion conditions as described in Example A1 (except for a compression ratio of 2.6 and a lip width of 1.0 mm).
The film thus obtained was measured for its dart impact strength, tensile elongation in the lengthwise direction and heat-shrinkage degree by the test methods as described above. The results obtained are set forth in Table 1.

Comparative Example A2

An ethylene/1-hexene copolymer [Ziegler catalyzed linear low-density polyethylene: T-LLDPE] was prepared in the same manner as in Preparation Example 1, except that bis (1,3-dimethylcyclopentadienyl)zirconium dichloride was replaced with a titanium type catalyst component as described in JP-B-63-54289, the methyl aluminoxane was replaced with triethylaluminum, the gas composition was adjusted, and the polymerization temperature was changed to 70 °C.
Using a blend of 50 parts by weight of the ethylene/1-hexene copolymer thus obtained [T-LLDPE: ethylene content = 84.4 % by weight; MFR (ASTM D 1238, 190 °C, load of 2.16 g) = 2.3 g/10 min; density (ASTM D 1505) = 0.918 g/cm$^3$; MT (190 °C) = 0.9 g; Tm = 122.0 °C; and quantity fraction of n-decane-soluble component (W) = 8.9 % by weight], and 50 parts by weight of the high-pressure low-density polyethylene obtained in Example A2, a film having a thickness of 60 μm was molded by blown-film extrusion under the extrusion conditions as shown in Table 1 and under the blown-film extrusion conditions as described in Example Al (except for a compression ratio of 2.6).
The film thus obtained was measured for its dart impact strength, tensile elongation in the lengthwise direction and heat-shrinkage degree by the test methods as described above. The results obtained are set forth in Table 1.

Comparative Example A3

A film having a thickness of 60 μm was molded in the same manner as in Example A3, except that the extrusion conditions as shown in Table 1 for Example A3 were altered to those as shown in Table 1 for Comparative Example A3 and the blown-film extrusion was carried out under the altered conditions of a compression ratio of 2.6 and a lip width of 1.0 mm.
The film thus obtained was measured for its dart impact strength, tensile elongation in the lengthwise direction and heat-shrinkage degree by the test methods as described above. The results obtained are set forth in Table 1. It was observed that the film had a pulled surface.

Comparative Example A4

A film having a thickness of 60 μm was molded in the same manner as in Example A3, except that the extrusion conditions as shown in Table 1 for Example A3 were altered to those as shown in Table 1 for Comparative Example A4 and the blown-film extrusion was carried out under the altered conditions of a lip width of 3.0, a cylinder temperature of 280 °C and a die temperature of extruder of 270 °C.
The film thus obtained was measured for its dart impact strength, tensile elongation in the lengthwise direction and heat-shrinkage degree by the test methods as described above. The results obtained are set forth in Table 1. The blown-film moldability was poor because the bubble was instable, and it was observed that the surface of the film was not uniform and had spots.

Table 1

| | Example A1 | Example A2 | Example A3 | Comp. Ex. A1 | Comp. Ex. A2 | Comp. Ex. A3 | Comp. Ex. A4 |
|---|---|---|---|---|---|---|---|
| <u>Polyethylene</u> | | | | | | | |
| Kind | M-LLDPE(1) | M-LLDPE(2) | M-LLDPE(3) | – | T-LLDPE | M-LLDPE(3) | M-LLDPE(3) |
| MFR [g/10 min] | 0.1 | 0.5 | 1.1 | | 2.3 | 1.1 | 1.1 |
| d [g/cm$^2$] | 0.910 | 0.915 | 0.915 | | 0.918 | 0.915 | 0.915 |
| MT (190 °C) [g] | 17 | 6.0 | 3.5 | | 0.9 | 3.5 | 3.5 |
| Tm [°C] | 111.5 | 112.4 | 112.0 | | 122.0 | 112.0 | 112.0 |
| W [wt%] | 0.5 | 0.3 | 0.3 | | 8.9 | 0.3 | 0.3 |
| Amount of HP-LDPE [wt%] | 0 | 30 | 50 | 100 | 50 | 50 | 50 |
| <u>Extrusion conditions</u> | | | | | | | |
| Resin pressure P [kg/cm$^2$] | 450 | 280 | 250 | 190 | 210 | 379 | 130 |
| Resin throughput K [kg/hr] | 41 | 41 | 41 | 26 | 25 | 25 | 35 |
| Resin temp. T [°C] | 220 | 192 | 189 | 171 | 182 | 176 | 290 |
| Lip sectional area A [cm$^2$] | 6.28 | 6.28 | 6.28 | 6.28 | 6.28 | 3.14 | 9.42 |
| 200Z/450Z | 310/697 | 204/459 | 179/447 | 228/514 | 120/271 | 162/365 | 134/303 |

Table 1 (continued)

|  | Example A1 | Example A2 | Example A3 | Comp. Ex. A1 | Comp. Ex. A2 | Comp. Ex. A3 | Comp. Ex. A4 |
|---|---|---|---|---|---|---|---|
| Film properties |  |  |  |  |  |  |  |
| Dart impact strength [g] | 1200 | 700 | 540 | 200 | 280 | Occurrence of pulled surface on film | Non-uniform surface, spots, and instable bubble |
| Tensile elongation (lengthwise) [%] | 450 | 410 | 400 | 310 | 420 |  |  |
| Heat-shrinkage degree [%] | 45/40 | 40/38 | 42/41 | 45/42 | 10/15 |  |  |

(Note 1) HP-LDPE = High-pressure low-density polyethylene
(MFR = 0.3 g/10 min; density = 0.921 g/cm$^3$)

(Note 2) "Z" of 200Z and 450Z:
$$Z = [K/(MFR^{1.5})/(T-120)/A^{0.2}]^{0.2}$$

EP 1 059 326 A2

In Table 1 above:

M-LLDPE (1):

$$2.2 \times MFR^{-0.84} = 15.2$$

$$400 \times d - 248 = 116.0$$

$$80 \times \exp(-100(d-0.88)) + 0.1 = 4.4$$

M-LLDPE (2):

$$2.2 \times MFR^{-0.84} = 3.9$$

$$400 \times d - 248 = 118.0$$

$$80 \times \exp(-100(d-0.88)) + 0.1 = 2.7$$

M-LLDPE (3):

$$2.2 \times MFR^{-0.84} = 2.0$$

$$400 \times d - 248 = 118.0$$

$$80 \times \exp(-100(d-0.88)) + 0.1 = 2.7$$

T-LLDPE:

$$2.2 \times MFR^{-0.84} = 1.1$$

$$400 \times d - 248 = 119.2$$

$$80 \times \exp(-100(d-0.88)) + 0.1 = 2.0$$

Example A4

Using the ethylene/1-hexene copolymer obtained in Preparation Example 2 [M-LLDPE (2)], a non-orientated film having a thickness of 200 μm was molded by blown-film extrusion under the conditions as described below. The film thus obtained was then orientated biaxially under the conditions as described below, to obtain a biaxially orientated film.

[Conditions of film molding and biaxial orientation]

Double bubble biaxial orientation machine

Extruder: 55 mmø
Die diameter: 80 mmø
Lip width: 1 mm

Water cooling mandrel: water temperature of 22 °C

Preset temperature of extruder:
        Cylinder 190 °C, Die 200 °C
Preheating temperature: 440 to 500 °C
        (temperature of far infrared rays heater)
Orientation temperature: 550 °C/540 °C/530 °C
Draw-up ratio: lengthwise direction 4,
        transverse direction 4.1

The biaxially orientated film thus obtained was measured for its precision of thickness, film impact strength and heat-shrinkage degree by the following test methods. The results obtained are set forth in Table 2.

[Test methods]

(1) Precision of thickness

A film was measured for its thickness at 1 cm intervals by the use of a measuring dial gauge, to obtain an average thickness (x) and a standard deviation (σ) of dispersion of thickness. The precision of thickness was calculated by the following formula:

$$\text{Precision of thickness (\%)} = (2\sigma/x) \times 100.$$

(2) Film impact strength

A circular film having a given area was set horizontally in a pendulum film impact tester manufactured by Toyoseiki Seisakusho K.K., and was struck at its center by a hemisphere of 0.6 inch in diameter fitted to the tip of a pendulum, to measure striking energy required to break through the film. The striking energy thus measured was taken as the impact strength.

(3) Heat-shrinkage degree

A sample having a size of 150 mm $\times$ 20 mm was marked on the surface of its center part with standard lines of 100 mm in length, and was allowed to stand for 15 minutes in an air oven in which a hot air temperature was set at 100 °C. Thereafter, the length of each standard line was measured, to obtain a reduction in the length. The degree of shrinkage is expressed as a percent reduction in the standard line, that is, a value obtained using the following formula:

$$\text{Heat-shrinkage degree} = [\text{reduction in length/original length(100 mm)}] \times 100.$$

Example A5

A non-orientated film having a thickness of 195 μm was molded in the same manner as in Example A4, except that the ethylene/1-hexene copolymer [M-LLDPE (2)] was replaced with the ethylene/1-hexene copolymer [M-LLDPE (3)] obtained in Preparation Example 3, and the blown-film extrusion conditions were altered to those as shown in Table 2. The film thus obtained was then orientated biaxially under the conditions as described in Example A4, to obtain a biaxially orientated film.
The film thus obtained was measured for its precision of thickness, film impact strength and heat-shrinkage degree by the test methods as described above. The results obtained are set forth in Table 2.

Comparative Example A5

A non-orientated film having a thickness of 201 μm was molded in the same manner as in Example A4, except that the ethylene/1-hexene copolymer [M-LLDPE (2)] was replaced with the Ziegler catalyzed linear low-density polyethylene [T-LLDPE] used in Comparative Example A2, and the blown-film extrusion conditions were altered to those as shown in Table 2. The film thus obtained was then orientated biaxially under the conditions as described in Example A4, to obtain a biaxially orientated film.
The film thus obtained was measured for its precision of thickness, film impact strength and heat-shrinkage degree by the test methods as described above. The results obtained are set forth in Table 2.

Table 2

| | Example A4 | Example A5 | Comp. Ex. A5 |
|---|---|---|---|
| **Polyethylene** | | | |
| Kind | M-LLDPE(2) | M-LLDPE(3) | T-LLDPE |
| MFR    [g/10 min] | 0.5 | 1.1 | 2.3 |
| d    [g/cm$^3$] | 0.915 | 0.915 | 0.918 |
| MT (190 °C)    [g] | 6.0 | 3.5 | 0.9 |
| Tm    [°C] | 112.4 | 112.0 | 112.0 |
| W    [wt%] | 0.3 | 0.3 | 8.9 |
| **Molding conditions (non-orientated film)** | | | |
| Resin pressure P    [kg/cm$^2$] | 256 | 237 | 221 |
| Resin throughput K    [kg/hr] | 6.5 | 6.3 | 6.7 |
| Resin temp. T    [°C] | 211 | 205 | 196 |
| Lip sectional area A    [cm$^2$] | 2.5 | 2.5 | 2.5 |
| 200Z/450Z | 140/315 | 111/250 | 112/230 |
| **Properties of orientated film** | | | |
| Average thickness (x) [μm] | 18 | 20 | 20 |
| Thickness precision (($2\sigma/x$) $\times$ 100) [%] | 9 | 11 | 36 |
| Film impact strength    [kg·cm/cm] | 9000 | 8200 | 7500 |
| Heat-shrinkage degree    [%] | 48/41 | 41/39 | 43/38 |
| (Note) "Z" of 200Z and 450Z: $Z = [K/(MFR^{1.5})/(T-120)/A^{0.2}]^{0.2}$ | | | |

As can be seen from Table 2, the biaxially orientated films obtained in Examples A4 and A5 have an excellent precision of film thickness as compared to that of Comparative Example A5. This showed that according to the present invention, it is possible to make the thickness of film thinner.

Examples regarding stretch packaging films

Preparation Example 4

Preparation of ethylene/1-octene copolymer [M-LLDPE (4)]

An ethylene/1-octene copolymer [M-LLDPE (4)] having an ethylene content of 93.6 % by weight was prepared in the same manner as in Preparation Example 1, except that 1-hexene was replaced with 1-octene, the gas composition was altered so as to obtain the copolymer [M-LLDPE (4)] which had density and MFR values as shown in Table 3, and the polymerization temperature was altered to 85 °C.
The properties of the resulting ethylene/1-octene copolymer [metallocene catalyzed linear low-density polyethylene: M-LLDPE (4)] are set forth in Table 3.

Preparation Example 5

Preparation of ethylene/1-hexene copolymer [M-LLDPE (5)]

A catalyst was prepared in the same manner as in Preparation Example 1, except that, in "Preparation of catalyst component", 20 liters of the toluene solution of bis (1,3-dimethylcyclopentadienyl)zirconium dichloride (Zr = 28.4 mmol/l) was replaced with 13.2 liters of a toluene solution of bis(1,3-n-butylmethylcyclopentadienyl)zirconium dichloride (Zr = 34.0 mmol/l) and 4.0 liter of a toluene solution of bis (1,3-demethylcyclopentadienyl)zirconium dichloride (Zr = 28.4 mmol/l). Using the catalyst thus obtained, an ethylene/1-hexene copolymer [M-LLDPE (5)] having an ethylene content of 91.2 % by weight was prepared in the same manner as in Preparation Example 1, except that the gas composition was altered so as to obtain the copolymer [M-LLDPE (5)] which had density and MFR values as shown in Table 3.

The properties of the resulting ethylene/1-hexene copolymer [metallocene catalyzed linear low-density polyethylene: M-LLDPE (5)] are set forth in Table 3.

Preparation Example 6

Preparation of ethylene/1-hexene copolymer [M-LLDPE (6)]

An ethylene/1-hexene copolymer [M-LLDPE (6)] having an ethylene content of 91.8 % by weight was prepared in the same manner as in Preparation Example 1, except that the gas composition was altered so as to obtain the copolymer [M-LLDPE (6)] which had density and MFR values as shown in Table 3.

The properties of the resulting ethylene/1-hexene copolymer [metallocene catalyzed linear low-density polyethylene: M-LLDPE (6)] are set forth in Table 3.

Preparation Example 7

Preparation of ethylene/1-hexene copolymer [M-LLDPE (7)]

A catalyst was prepared in the same manner as in Preparation Example 1, except that, in "Preparation of catalyst component", 20 liters of the toluene solution of bis (1,3-dimethylcyclopentadienyl)zirconium dichloride (Zr = 28.4 mmol/l) was replaced with 10.7 liters of a toluene solution of bis(1,3-n-butylmethylcyclopentadienyl)zirconium dichloride (Zr = 34.0 mmol/l) and 14.0 liters of a toluene solution of bis (methylcyclopentadienyl)zirconium dichloride (Zr = 14.0 mmol/l). Using the catalyst thus obtained, an ethylene/1-hexene copolymer [M-LLDPE (7)] having an ethylene content of 90.2 % by weight was prepared in the same manner as in Preparation Example 1, except that the gas composition was altered so as to obtain the copolymer [M-LLDPE (7)] which had density and MFR values as shown in Table 3.

The properties of the resulting ethylene/1-hexene copolymer [metallocene catalyzed linear low-density polyethylene: M-LLDPE (7)] are set forth in Table 3.

Preparation Example 8

Preparation of ethylene/1-hexene copolymer [M-LLDPE (8)]

An ethylene/1-hexene copolymer [M-LLDPE (8)] having an ethylene content of 82.7 % by weight was prepared in the same manner as in Preparation Example 1, except that the gas composition was altered so as to obtain the copolymer [M-LLDPE (8)] which had density and MFR values as shown in Table 3, the ethylene concentration was altered to 25 % and the polymerization temperature was altered to 70 °C.

The properties of the resulting ethylene/1-hexene copolymer [metallocene catalyzed linear low-density polyethylene: M-LLDPE (8)] are set forth in Table 3.

Preparation Example 9

Preparation of ethylene/1-hexene copolymer [M-LLDPE (9)]

An ethylene/1-hexene copolymer [M-LLDPE (9)] having an ethylene content of 83.9% by weight was prepared in the same manner as in Preparation Example 1, except that the catalyst was replaced with that used in Preparation Example 5, the gas composition was altered so as to obtain the copolymer [M-LLDPE (9)] which had density and MFR values as shown in Table 3, the ethylene concentration was altered to 25 % and the polymerization temperature was altered to 70 °C.

The properties of the resulting ethylene/1-hexene copolymer [metallocene catalyzed linear low-density polyethylene: M-LLDPE (9)] are set forth in Table 3.

Preparation Example 10

Preparation of ethylene/1-hexene copolymer [M-LLDPE (10)]

An ethylene/1-hexene copolymer [M-LLDPE (10)] having an ethylene content of 87.6 % by weight was prepared in the same manner as in Preparation Example 1, except that the catalyst was replaced with that used in Preparation Example 5, and the gas composition was altered so as to obtain the copolymer [M-LLDPE (10)] which had density and MFR values as shown in Table 3.

The properties of the resulting ethylene/1-hexene copolymer [metallocene catalyzed linear low-density polyethylene: M-LLDPE (10)] are set forth in Table 3.

Preparation Example 11

Preparation of ethylene/1-hexene copolymer [M-LLDPE (11)]

An ethylene/1-hexene copolymer [M-LLDPE (11)] having an ethylene content of 87.6 % by weight was prepared in the same manner as in Preparation Example 1, except that the catalyst was replaced with that used in Preparation Example 7, and the gas composition was altered so as to obtain the copolymer [M-LLDPE (11)] which had density and MFR values as shown in Table 3.

The properties of the resulting ethylene/1-hexene copolymer [metallocene catalyzed linear low-density polyethylene: M-LLDPE (11)] are set forth in Table 3.

Example B1

A three-layered cast film consisting of outer, intermediate and inner layers was molded under the molding conditions as described below and under the extrusion conditions as shown in Table 3. As a resin for the intermediate layer, the ethylene/1-octene copolymer obtained in Preparation Example 4 [M-LLDPE (4): ethylene content = 93.6 % by weight; density (ASTM D 1505) = 0.920 g/cm$^3$; MFR (ASTM D 1238, 190 °C, load of 2.16 kg) = 2.0 g/10 min; MT = 2.2 g; Tm = 114.3 °C ; W = 0.6 % by weight; number of long chain branches (per 1,000 carbon atoms) = 15.0; and proportion of a component eluted at a temperature of not lower than 100 °C to a total component eluted, as measured by a temperature rise elution test (TREF) = 2.2 %] was used. As a resin for the inner and outer layers, the ethylene/1-hexene copolymer obtained in Preparation Example 8 [M-LLDPE (8): ethylene content = 82.7 % by weight; density (ASTM D 1505) = 0.900 g/cm$^3$; MFR (ASTM D 1238, 190 °C, load of 2.16 kg) = 2.0 g/10 min; MT = 2.2 g; Tm = 91.0 °C; W = 2.1 % by weight] was used.

[Film molding conditions]

Cast film molding machine:

    T-die extruder manufactured by Toshiba Unimelt Co.
    65 mm∅ screw: L/D = 30
    Compression ratio: 2.2
    Die width: 600 mm
    Lip width: 0.8 mm

Film thickness: 25 μm
Film structure:
    Inner layer (5 μm)/intermediate layer (15 μm)/outer layer (5 μm)
Preset temperature of extruder:
    Cylinder 200 °C, Die 210 °C
Take-up rate: 32 m/min

The film thus obtained was measured for its haze, gloss, dart impact strength and penetration strength by the following test methods. Further, the film was tested for suitability for stretch packaging as described below. The results obtained are set forth in Table 4.

[Test methods]

(1) Haze

The haze was measured in accordance with ASTM D 1003.

(2) Gloss

The gloss was measured in accordance with ASTM D 2457.

(3) Dart impact strength

A value measured for a film in accordance with the method A of ASTM D 1709 was divided by a thickness of the film. The quotient thus obtained was taken as the dart impact strength.

(4) Penetration strength

A film was fixed in a tester of constant crosshead speed type by a clamp having a diameter of 5 cm, and the film was penetrated with a 0.7 mm-long needle having a flat point at a rate of 50 mm/min, to measure a maximum stress. The maximum stress value was taken as the penetration strength.

(5) Draw-up ratio

An original film prior to orientation was marked at an interval of 10 cm, and after it was taken up, the interval ($L_1$) between the marks were measured. The draw-up ratio (n) was calculated by the following formula:

$$n = L_1/10.$$

(6) Shrinkage load

A film was wrapped by a film wrapper of V-series manufactured by Lantec Co., which was equipped with a platform scale. A readout value on the scale when the film was wrapped given times (5 times) was taken as the shrinkage load.

(7) Tear propagation property

A stretchable film orientated at a given orientation ratio, in which an initial tear of 10 cm was made by a cutter knife in its lengthwise direction, was wrapped by a film wrapper of V-series manufactured by Lantec Co. The tear propagation property was evaluated by a length to which the initial tear was propagated when the film was wrapped.

<Standard of evaluation>

Excellent: The propagated length is within 1.5 times the initial tear.
Good: The propagated length is within 3 times the initial tear.
Fair: The propagated length is within 5 times the initial tear.
Bad: The tear is propagated throughout the film.

Example B2

A three-layered cast film consisting of outer, intermediate and inner layers was molded under the extrusion conditions as shown in Table 3 and under the molding conditions as described in Example B1. As a resin for the intermediate layer, the ethylene/1-hexene copolymer obtained in Preparation Example 5 [M-LLDPE (5): ethylene content = 91.2 % by weight; density (ASTM D 1505) = 0.920 g/cm$^3$; MFR (ASTM D 1238, 190 °C, load of 2.16 kg) = 3.0 g/10 min; MT = 1.8 g; Tm = 115.8 °C; W = 0.3 % by weight; number of long chain branches (per 1,000 carbon atoms) < 1; and proportion of a component eluted at a temperature of not lower than 100 °C to a total component eluted, as measured by a temperature rise elution test (TREF) = 2.5 %] was used. As a resin for the inner layer, the ethylene/ 1-hexene copolymer obtained in Preparation Example 9 [M-LLDPE (9): ethylene content = 83.9 % by weight; density (ASTM D 1505) = 0.905 g/cm$^3$; MFR (ASTM D 1238, 190 °C, load of 2.16 kg) = 3.0 g/10 min; MT = 1.8 g; Tm = 92.3 °C; and W = 1.8 % by weight] was used. As a resin for the outer layer, the ethylene/1-hexene copolymer obtained in Preparation Example 10 [M-LLDPE (10): ethylene content = 87.6 % by weight; density (ASTM D 1505) = 0.910 g/cm$^3$; MFR (ASTM D 1238, 190 °C, load of 2.16 kg) = 3.0 g/10 min; MT = 1.8 g; Tm = 111.6 °C; W = 0.8 % by weight] was used

The film thus obtained was measured for its haze, gloss, dart impact strength and penetration strength by the test methods as described above. Further, the film was tested for suitability for stretch packaging as described above. The results obtained are set forth in Table 4.

Example B3

A three-layered cast film consisting of outer, intermediate and inner layers was molded under the extrusion conditions as shown in Table 3 and under the molding conditions as described in Example B1. As a resin for the intermediate layer, the ethylene/1-hexene copolymer obtained in Preparation Example 6 [M-LLDPE (6): ethylene content = 91.8 % by weight; density (ASTM D 1505) = 0.920 g/cm$^3$; MFR (ASTM D 1238, 190 °C, load of 2.16 kg) = 1.0 g/10 min; MT = 3.5 g; and Tm = 114.6; W = 0.3 % by weight] was used. As a resin for the inner and outer layers, the ethylene/1-hexene copolymer obtained in Preparation Example 11 [M-LLDPE (11): ethylene content = 87.6 % by weight; density (ASTM D 1505) = 0.910 g/cm$^3$; MFR (ASTM D 1238, 190 °C, load of 2.16 kg) =4.0 g/10 min; MT = 1.1 g; Tm = 111.4 °C; W = 0.9 % by weight] was used.

The film thus obtained was measured for its haze, gloss, dart impact strength and penetration strength by the test methods as described above. Further, the film was tested for suitability for stretch packaging as described above. The results obtained are set forth in Table 4.

Example B4

A monolayered cast film having a thickness of 25 μm was molded under the extrusion conditions as shown in Table 3 and under the molding conditions as described in Example B1. As a resin for this layer, the ethylene/1-hexene copolymer obtained in Preparation Example 7 [M-LLDPE (7): ethylene content = 90.2 % by weight; density (ASTM D 1505) = 0.915 g/cm$^3$; MFR (ASTM D 1238, 190 °C, load of 2.16 kg) = 3.0 g/10 min; MT = 1.8 g; Tm = 111.9; and W = 0.5 % by weight] was used.

The film thus obtained was measured for its haze, gloss, dart impact strength and penetration strength by the test methods as described above. Further, the film was tested for suitability for stretch packaging as described above. The results obtained are set forth in Table 4.

Comparative Example B1

An ethylene/1-hexene copolymer [Ziegler catalyzed linear low-density polyethylene: T-LLDPE (1)] was prepared in the same manner as in Preparation Example 1, except that bis(1,3-dimethylcyclopentadienyl)zirconium dichloride was replaced with a titanium type catalyst component as described in JP-B-63-54289, the methyl aluminoxane was replaced with triethylaluminum, the gas composition was adjusted and the polymerization temperature was altered to 70 °C. A further ethylene/1-hexene copolymer [Ziegler catalyzed linear low-density polyethylene: T-LLDPE (2)] was also prepared by a solution polymerization process by the use of the same catalyst system.

A three-layered cast film consisting of outer, intermediate and inner layers was molded under the extrusion conditions as shown in Table 3 and under the molding conditions as described in Example B1. As a resin for the intermediate layer, the ethylene/1-hexene copolymer obtained above [T-LLDPE (1): ethylene content = 83.7 % by weight; density (ASTM D 1505) = 0.917 g/cm$^3$; MFR (ASTM D 1238, 190 °C, load of 2.16 g) = 2.3 g/10 min; MT = 0.9 g; Tm = 121.0 °C; and W = 9.5 % by weight] was used. As a resin for the inner and outer layers, the ethylene/1-hexene copolymer obtained above [T-LLDPE (2): ethylene content = 79.8 % by weight; density (ASTM D 1505) = 0.912 g/cm$^3$; MFR (ASTM D 1238, 190 °C, load of 2.16 kg) = 3.2 g/10 min; MT = 0.7 g; Tm = 117.4 °C; and W = 8.8 % by weight] was used.

The film thus obtained was measured for its haze, gloss, dart impact strength and penetration strength by the test methods as described above. Further, the film was tested for suitability for stretch packaging as described above. The results obtained are set forth in Table 4.

Comparative Example B2

An ethylene/1-hexene copolymer [Ziegler catalyzed linear low-density polyethylene: T-LLDPE (4)] was prepared in the same manner as in Preparation Example 1, except that bis (1,3-dimethylcyclopentadienyl)zirconium dichloride was replaced with a titanium type catalyst component as described in JP-B-63-54289, the methyl aluminoxane was replaced with triethylaluminum, the gas composition was adjusted and the polymerization temperature was altered to 70 °C. A further ethylene/1-hexene copolymer [Ziegler catalyzed linear low-density polyethylene: T-LLDPE (3)] was also prepared by a solution polymerization process by the use of the same catalyst system.

A three-layered cast film consisting of outer, intermediate and inner layers was molded under the extrusion conditions as shown in Table 3 and under the molding conditions as described in Example B1. As a resin for the inner layer, the ethylene/1-hexene copolymer obtained above [T-LLDPE (3): ethylene content = 70.4 % by weight; density (ASTM D 1505) = 0.904 g/cm$^3$; MFR (ASTM D 1238, 190 °C, load of 2.16 g) = 4.0 g/10 min; MT = 0.6 g; Tm = 115.7 °C; and W = 12.5 % by weight] was used. As a resin for the intermediate layer, the ethylene/1-hexene copolymer obtained above [T-LLDPE (4): ethylene content = 86.1 % by weight; density (ASTM D 1505) = 0.920 g/cm$^3$; MFR (ASTM D 1238, 190 °C, load of 2.16 kg) = 1.0 g/10 min; MT = 1.8 g; Tm = 122.0 °C; and W = 6.9 % by weight] was used. As a resin for the outer layer, the ethylene/1-hexene copolymer obtained in Comparative Example B1 [T-LLDPE (2)] was used.

The film thus obtained was measured for its haze, gloss, dart impact strength and penetration strength by the test methods as described above. Further, the film was tested for suitability for stretch packaging as described above. The results obtained are set forth in Table 4.

Table 3

| | | Example B1 | Example B2 | Example B3 | Example B4 | Comp. Ex. B1 | Comp Ex. B2 |
|---|---|---|---|---|---|---|---|
| **Inner layer resin** | | | | | | | |
| Kind | | M-LLDPE(8) | M-LLDPE(9) | M-LLDPE(11) | M-LLDPE(7) | T-LLDPE(2) | T-LLDPE(3) |
| d | $[g/cm^3]$ | 0.900 | 0.905 | 0.910 | 0.915 | 0.912 | 0.904 |
| MFR | [g/10min] | 2.0 | 3.0 | 4.0 | 3.0 | 3.2 | 4.0 |
| MT | [g] | 2.2 | 1.8 | 1.1 | 1.8 | 0.7 | 0.6 |
| Tm | [°C] | 91.0 | 92.3 | 111.4 | 111.9 | 117.4 | 115.7 |
| W | [wt%] | 2.1 | 1.8 | 0.9 | 0.5 | 8.8 | 12.5 |
| **Intermediate layer resin** | | | | | | | |
| Kind | | M-LLDPE(4) | M-LLDPE(5) | M-LLDPE(6) | | T-LLDPE(1) | T-LLDPE(4) |
| d | $[g/cm^3]$ | 0.920 | 0.920 | 0.920 | | 0.917 | 0.920 |
| MFR | [g/10min] | 2.0 | 3.0 | 1.0 | ditto | 2.3 | 1.0 |
| MT | [g] | 2.2 | 1.8 | 3.5 | | 0.9 | 1.8 |
| Tm | [°C] | 114.3 | 115.8 | 114.6 | | 121.0 | 122.0 |
| W | [wt%] | 0.6 | 0.3 | 0.3 | | 9.5 | 6.9 |
| **Outer layer resin** | | | | | | | |
| Kind | | M-LLDPE(8) | M-LLDPE(10) | M-LLDPE(11) | | T-LLDPE(2) | T-LLDPE(2) |
| d | $[g/cm^3]$ | 0.900 | 0.910 | 0.910 | | 0.912 | 0.912 |
| MFR | [g/10 min] | 2.0 | 3.0 | 4.0 | ditto | 3.2 | 3.2 |
| MT | [g] | 2.2 | 1.8 | 1.1 | | 0.7 | 0.7 |
| Tm | [°C] | 91.0 | 111.6 | 111.4 | | 117.4 | 117.4 |
| W | [wt%] | 2.1 | 0.8 | 0.9 | | 8.8 | 8.8 |

Table 3 (continued)

| | Example B1 | Example B2 | Example B3 | Example B4 | Comp. Ex. B1 | Comp Ex. B2 |
|---|---|---|---|---|---|---|
| Extrusion conditions of intermediate layer and monolayer | | | | | | |
| Screw revoln. Number [rpm] | 40 | 40 | 40 | 40 | 40 | 40 |
| Resin throughput K [kg/hr] | 45 | 65 | 38 | 65 | 30 | 30 |
| Resin pressure P [kg/cm$^2$] | 135 | 110 | 210 | 110 | 350 | 350 |
| Resin temp. T [°C] | 210 | 210 | 220 | 210 | 260 | 260 |
| Lip sectional area A [cm$^2$] | 4.8 | 4.8 | 4.8 | 4.8 | 4.8 | 4.8 |
| 200Z/450Z | 133/299 | 127/285 | 155/348 | 127/285 | 138/310 | 138/310 |

(Note) "Z" of 200Z and 450Z: $Z = [K/(MFR^{1.5})/(T-120)/A^{0.2}]^{0.2}$

In Table 3 above:

M-LLDPE (4):

$2.2 \times MFR^{-0.84} = 1.2$

$400 \times d - 248 = 120.0$

$80 \times \exp(-100(d-0.88)) + 0.1 = 1.6$

M-LLDPE (5):

$2.2 \times MFR^{-0.84} = 0.9$

$400 \times d - 248 = 120.0$

$80 \times \exp(-100(d-0.88)) + 0.1 = 1.6$

M-LLDPE (6):

$2.2 \times MFR^{-0.84} = 2.2$

$400 \times d - 248 = 120.0$

$80 \times \exp(-100(d-0.88)) + 0.1 = 1.6$

M-LLDPE (7):

$2.2 \times MFR^{-0.84} = 0.9$

$400 \times d - 248 = 118.0$

$80 \times \exp(-100(d-0.88)) + 0.1 = 2.7$

M-LLDPE (8):

$2.2 \times MFR^{-0.84} = 1.2$

$400 \times d - 248 = 112.0$

$80 \times \exp(-100(d-0.88)) + 0.1 = 12.0$

M-LLDPE (9):

$2.2 \times MFR^{-0.84} = 0.9$

$400 \times d - 248 = 114.0$

$80 \times \exp(-100(d-0.88)) + 0.1 = 7.3$

M-LLDPE (10)

$$2.2 \times MFR^{-0.84} = 0.9$$

$$400 \times d - 248 = 116.0$$

$$80 \times \exp(-100(d-0.88)) + 0.1 = 4.4$$

M-LLDPE (11)

$$2.2 \times MFR^{-0.84} = 0.7$$

$$400 \times d - 248 = 116.0$$

$$80 \times \exp(-100(d-0.88)) + 0.1 = 4.4$$

T-LLDPE (1)

$$2.2 \times MFR^{-0.84} = 1.1$$

$$400 \times d - 248 = 118.8$$

$$80 \times \exp(-100(d-0.88)) + 0.1 = 2.2$$

T-LLDPE (2)

$$2.2 \times MFR^{-0.84} = 0.8$$

$$400 \times d - 248 = 116.8$$

$$80 \times \exp(-100(d-0.88)) + 0.1 = 3.6$$

T-LLDPE (3)

$$2.2 \times MFR^{-0.84} = 0.7$$

$$400 \times d - 248 = 113.6$$

$$80 \times \exp(-100(d-0.88)) + 0.1 = 8.0$$

T-LLDPE (4)

$$2.2 \times MFR^{-0.84} = 2.2$$

$$400 \times d - 248 = 120.0$$

$$80 \times \exp(-100(d-0.88)) + 0.1 = 1.6$$

Table 4

| | | Example | | | | Comp. Example | |
|---|---|---|---|---|---|---|---|
| | | B1 | B2 | B3 | B4 | B1 | B2 |
| Film properties | | | | | | | |
| Haze [%] | | 1.5 | 1.7 | 2.0 | 1.7 | 2.6 | 2.3 |
| Gloss [%] | | 165 | 148 | 140 | 145 | 125 | 130 |
| Dart impact strength [g] | | 600 | 480 | 550 | 470 | 400 | 420 |
| Penetration Strength [N] | | 6.3 | 5.8 | 5.9 | 5.8 | 5.6 | 5.6 |
| Packaging suitability | | | | | | | |
| Draw-up ratio [times] | | 3.9 | 3.9 | 3.5 | 3.9 | 3.5 | 3.9 |
| Shrinkage load [kg] | | 5.0 | 4.2 | 4.8 | 4.3 | 4.3 | Break |
| Tear propagation property | | Excellent | Excellent | Good | Good | Fair | Bad |

Examples regarding sealant films

Preparation Example 12

Preparation of ethylene/1-hexene copolymer [M-LLDPE (12)]

An ethylene/1-hexene copolymer [M-LLDPE (12)] having an ethylene content of 91.2 % by weight was prepared in the same manner as in Preparation Example 1, except that the catalyst was replaced with that used in Preparation Example 7 and the gas composition was altered so as to obtain the copolymer [M-LLDPE (12)] which had density and MFR values as shown in Table 5.

The properties of the resulting ethylene/1-hexene copolymer [metallocene catalyzed linear low-density polyethylene: M-LLDPE (12)] are set forth in Table 5.

Example C1

Using the ethylene/1-octene copolymer obtained in Preparation Example 4 [M-LLDPE (4): ethylene content = 93.6 % by weight; density (ASTM D 1505) = 0.920 g/cm$^3$; MFR (ASTM D 1238, 190 °C, load of 2.16 kg) = 2.0 g/10 min; MT = 2.2 g; W = 0.6 % by weight; Tm = 114.3 °C; number of long chain branches (per 1,000 carbon atoms) = 15.0; and proportion of a component eluted at a temperature of not lower than 100 °C to a total component eluted, as measured by a temperature rise elution test (TREF) = 2.2 %], a cast film having a thickness of 40 μm was molded under the following molding conditions and under the extrusion conditions as shown in Table 5.

[Film molding conditions]

Cast film molding machine:

T-die extruder manufactured by Toshiba Unimelt Co.
65 mmø screw: L/D = 30
Compression ratio: 2.2
Die width: 600 mm
Lip width: 0.8 mm

Film thickness: 40 μm
Preset temperature of extruder:
Cylinder 200 °C, Die 210 °C

Take-up rate: 20 m/min

The film thus obtained was measured for its haze, gloss, blocking force, film impact strength, Elmendorf tear strength, sealing starting temperature and absolute sealing strength by the test methods as described below. Further, the film was evaluated for the occurrence of reduction in its thickness and its state when sealed. The results obtained are set forth in Table 6 together with evaluation of neck-in and high-speed production stability in film molding.

[Test methods]

(1) Haze

The haze was measured in accordance with ASTM D 1003.

(2) Gloss

The gloss was measured in accordance with ASTM D 2457.

(3) Blocking force

The blocking force was measured in accordance with ASTM D 1893-67.

(4) Film impact strength

A circular film of a given area was set horizontally in a pendulum film impact tester manufactured by Toyoseiki Seisakusho K.K., and was struck at its center by a hemisphere of 0.6 inch in diameter fitted to the tip of a pendulum, to measure striking energy required to break through the film. The striking energy thus measured was taken as the film impact strength.

(5) Elmendorf tear strength

The Elmendorf tear strength was measured by a method in accordance with JIS Z 1702 in the MD direction and the TD direction.

(6) Sealing starting temperature

The term "heat-sealing starting temperature" means a temperature immediately after a heat sealed portion in the measurement of heat-sealing strength is changed from interfacial peel to cohesive peel.

(7) Absolute sealing strength

The term "absolute sealing strength" means a sealing strength at a heat-sealing temperature of 140 °C.

(8) Reduction in thickness of film by sealing

The reduction in thickness of film by sealing was calculated using the following formula and was evaluated by the following standard.

$$\text{Reduction in thickness (\%)} = [Ts/(Ft \times 2)] \times 100,$$

wherein Ts is a thickness of a sealed portion of a film which was sealed at 140 °C, and Ft is a thickness of the film.

<Standard of three-rank evaluation>

Excellent: The reduction in thickness is 95 to 100 %.
Good: The reduction in thickness is not less than 85 % and less than 95 %.

Bad: The reduction in thickness is less than 85 %.

(9) Neck-in

The neck-in was calculated using the following formula and was evaluated by the following standard.

$$\text{Neck-in} = (\text{T-die slit width}) - (\text{product width}) \ (\text{mm}),$$

where the product width is measured before trimming.

<Standard of three-rank evaluation>

Excellent: The neck-in is not more than 70 mm.
Good: The neck-in is more than 70 mm and less than 80 mm.
Bad: The neck-in is not less than 80 mm.

(10) High-speed production stability

The high-speed production stability was evaluated on the basis of an indication that is a production speed at which a cast film can be produced without occurrence of pulled surface and with a precision of thickness of not higher than 10 %, by the following standard.

<Standard of three-rank evaluation>

Excellent: Production speed is not lower than 250 m/min.
Good: Production speed is higher than 200 m/min and lower than 250 m/min.
Bad: Production speed is not higher than 200 m/min.

Example C2

A cast film having a thickness of 40 $\mu$m was molded in the same manner as in Example Cl under the extrusion conditions as shown in Table 5 and under the molding conditions as described in Example C1, except that the ethylene/ 1-octene copolymer obtained in Preparation Example 4 [M-LLDPE (4)] was replaced with the ethylene/1-hexene copolymer obtained in Preparation Example 12 [M-LLDPE (12): ethylene content = 91.2 % by weight; density (ASTM D 1505) = 0.920 g/cm³; MFR (ASTM D 1238, 190 °C, load of 2.16 kg) = 4.0 g/10 min; MT = 1.1 g; W = 0.3 % by weight; Tm = 114.1 °C; and number of long chain branches (per 1,000 carbon atoms) < 1].

The film thus obtained was measured for its haze, gloss, blocking force, film impact strength, Elmendorf tear strength, sealing starting temperature and absolute sealing strength by the test methods as described above. Further, the film was evaluated for occurrence of reduction in its thickness and its state when sealed. The results obtained are set forth in Table 6 together with evaluation of neck-in and high-speed production stability in film molding.

Comparative Example C1

A catalyst was prepared in the same manner as in Preparation Example 1, except that, in "Preparation of catalyst component", 20 liters of the toluene solution of bis (1,3-dimethylcyclopentadienyl)zirconium dichloride (Zr = 28.4 mmol/l) was replaced with 16.7 liters of a toluene solution of bis(1,3-n-butylmethylcyclopentadienyl)zirconium dichloride (Zr = 34.0 mmol/l).

Then, using the catalyst thus obtained, an ethylene/1-hexene copolymer [metallocene catalyzed linear low-density polyethylene: M-LLDPE] was prepared in the same manner as in Preparation Example 1, except that the gas composition was altered so as to obtain the copolymer [M-LLDPE] which had density and MFR values as shown in Table 5.

A cast film having a thickness of 40 $\mu$m was molded in the same manner as in Example C1 under the extrusion conditions as shown in Table 5 and under the molding conditions as described in Example C1, except that the ethylene/1-octene copolymer obtained in Preparation Example 4 [M-LLDPE (4)] was replaced with the ethylene/1-hexene copolymer as obtained above [M-LLDPE: ethylene content = 91.8 % by weight; density (ASTM D 1505) = 0.920 g/cm$^3$; MFR (ASTM D 1238, 190 °C, load of 2.16 kg) = 4.0 g/10 min; MT = 0.5 g; W = 0.3 % by weight; Tm = 113.8 °C; and number of long chain branches (per 1,000 carbon atoms) < 1].

The film thus obtained was measured for its haze, gloss, blocking force, film impact strength, Elmendorf tear strength, sealing starting temperature and absolute sealing strength by the test methods as described above. Further, the film was evaluated for occurrence of reduction in its thickness and its state when sealed. The results obtained are set forth in Table 6 together with evaluation of neck-in and high-speed production stability in film molding.

Comparative Example C2

An ethylene/1-hexene copolymer [Ziegler catalyzed linear low-density polyethylene: T-LLDPE] was prepared in the same manner as in Preparation Example 1, except that bis (1,3-dimethylcyclopentadienyl)zirconium dichloride was replaced with a titanium type catalyst component as described in JP-B-63-54289, the methyl aluminoxane was replaced with triethylaluminum, the gas composition was adjusted and the polymerization temperature was altered to 70 °C.

A cast film having a thickness of 40 μm was molded in the same manner as in Example C1 under the extrusion conditions as shown in Table 5 and under the molding conditions as described in Example C1, except that the ethylene/1-octene copolymer obtained in Preparation Example 4 [M-LLDPE (4)] was replaced with the Ziegler catalyzed linear low-density polyethylene as obtained above [T-LLDPE: ethylene content = 86.9 % by weight; density (ASTM D 1505) = 0.920 g/cm$^3$; MFR (ASTM D 1238, 190 °C, load of 2.16 kg) = 2.0 g/10 min; MT = 1.0 g; W = 7.4 % by weight; and Tm = 122.2 °C].

The film thus obtained was measured for its haze, gloss, blocking force, film impact strength, Elmendorf tear strength, sealing starting temperature and absolute sealing strength by the test methods as described above. Further, the film was evaluated for occurrence of reduction in its thickness and its state when sealed. The results obtained are set forth in Table 6 together with evaluation of neck-in and high-speed production stability in film molding.

Example C3

A cast film having a thickness of 40 μm was molded in the same manner as in Example C1 under the extrusion conditions as shown in Table 5 and under the molding conditions as described in Example C1, except that the ethylene/1-octene copolymer obtained in Preparation Example 4 [M-LLDPE (4)] was replaced with a blend of 80 parts by weight of the ethylene/1-hexene copolymer obtained in Preparation Example 12 [M-LLDPE (12)] and 20 parts by weight of a high-pressure low-density polyethylene [MFR (ASTM D 1238, 190 °C, load of 2.16 kg) = 3.6 g/10 min; and density (ASTM D 1505) = 0.923 g/cm$^3$].

The film thus obtained was measured for its haze, gloss, blocking force, film impact strength, Elmendorf tear strength, sealing starting temperature and absolute sealing strength by the test methods as described above. Further, the film was evaluated for occurrence of reduction in its thickness and its state when sealed. The results obtained are set forth in Table 6 together with evaluation of neck-in and high-speed production stability in film molding.

Comparative Example C3

A cast film having a thickness of 40 μm was molded in the same manner as in Example Cl under the extrusion conditions as shown in Table 5 and under the molding conditions as described in Example C1, except that the ethylene/1-octene copolymer obtained in Preparation Example 4 [M-LLDPE (4)] was replaced with a blend of 80 parts by weight of the metallocene catalyzed linear low-density polyethylene used in Comparative Example C1 [M-LLDPE] and 20 parts by weight of a high-pressure low-density polyethylene [MFR (ASTM D 1238, 190 °C, load of 2.16 kg) = 3.6 g/10 min; and density (ASTM D 1505) = 0.923 g/cm$^3$].

The film thus obtained was measured for its haze, gloss, blocking force, film impact strength, Elmendorf tear strength, sealing starting temperature and absolute sealing strength by the test methods as described above. Further, the film was evaluated for occurrence of reduction in its thickness and its state when sealed. The results obtained are set forth in Table 6 together with evaluation of neck-in and high-speed production stability in film molding.

Comparative Example C4

A cast film having a thickness of 40 μm was molded in the same manner as in Example C1 under the extrusion conditions as shown in Table 5 and under the molding conditions as described in Example C1, except that the ethylene/1-octene copolymer obtained in Preparation Example 4 [M-LLDPE (4)] was replaced with a blend of 80 parts by weight of the Ziegler catalyzed linear low-density polyethylene used in Comparative Example C2 [T-LLDPE] and 20 parts by weight of a high-pressure low-density polyethylene [MFR (ASTM D 1238, 190 °C, load of 2.16 kg) = 3.6 g/10 min; and density (ASTM D 1505) = 0.923 g/cm$^3$].

The film thus obtained was measured for its haze, gloss, blocking force, film impact strength, Elmendorf tear strength, sealing starting temperature and absolute sealing strength by the test methods as described above. Further, the film was evaluated for occurrence of reduction in its thickness and its state when sealed. The results obtained are set forth in Table 6 together with evaluation of neck-in and high-speed production stability in film molding.

Table 5

| | Example C1 | Example C2 | Comp. Ex. C1 | Comp. Ex. C2 | Example C3 | Comp. Ex. C3 | Comp. Ex. C4 |
|---|---|---|---|---|---|---|---|
| Polyethylene | | | | | | | |
| Kind | M-LLDPE(4) | M-LLDPE(12) | M-LLDPE | T-LLDPE | M-LLDPE(12) | M-LLDPE | T-LLDPE |
| MFR [g/10min] | 2.0 | 4.0 | 4.0 | 2.0 | 4.0 | 4.0 | 2.0 |
| d [g/cm$^3$] | 0.920 | 0.920 | 0.920 | 0.920 | 0.920 | 0.920 | 0.920 |
| MT (190 °C) [g] | 2.2 | 1.1 | 0.5 | 1.0 | 1.1 | 0.5 | 1.0 |
| Tm [°C] | 114.3 | 114.1 | 113.8 | 122.2 | 114.1 | 113.8 | 122.2 |
| W [wt%] | 0.6 | 0.3 | 0.3 | 7.4 | 0.3 | 0.3 | 7.4 |
| Amount of HP-LDPE [wt%] | 0 | 0 | 0 | 0 | 20 | 20 | 20 |
| Extrusion conditions | | | | | | | |
| Screw revol. Number [rpm] | 40 | 40 | 40 | 40 | 40 | 40 | 40 |
| Resin pressure P [kg/cm$^2$] | 135 | 120 | 200 | 150 | 130 | 220 | 160 |
| Resin throughput K [kg/hr] | 45 | 65 | 65 | 45 | 65 | 65 | 45 |
| Resin temp. T [°C] | 210 | 210 | 210 | 230 | 210 | 210 | 230 |
| Lip sectional area A [cm$^2$] | 4.8 | 4.8 | 4.8 | 4.8 | 4.8 | 4.8 | 4.8 |
| 200Z/450Z | 103/233 | 90/203 | 90/203 | 99/223 | 90/203 | 90/203 | 99/223 |

(Note 1) HP-LDPE: High-pressure low-density polyethylene
(MFR = 3.6 g/10 min; density = 0.923g/cm$^3$)

(Note 2) ''Z'' of 200Z and 450Z: $Z = [K/(MFR^{1.5})/(T-120)/A^{0.2}]^{0.2}$

EP 1 059 326 A2

In Table 5 above:

M-LLDPE (12):

$2.2 \times MFR^{-0.84} = 0.7$

$400 \times d - 248 = 120.0$

$80 \times \exp(-100(d-0.88)) + 0.1 = 1.6$

M-LLDPE:

$2.2 \times MFR^{-0.84} = 0.7$

$400 \times d - 248 = 120.0$

$80 \times \exp(-100(d-0.88)) + 0.1 = 1.6$

T-LLDPE:

$2.2 \times MFR^{-0.84} = 1.2$

$400 \times d - 248 = 120.0$

$80 \times \exp(-100(d-0.88)) + 0.1 = 1.6$

Table 6

| | Example C1 | Example C2 | Comp. Ex. C1 | Comp. Ex. C2 | Example C3 | Comp. Ex. C3 | Comp. Ex. C4 |
|---|---|---|---|---|---|---|---|
| Film moldability | | | | | | | |
| Neck-in | Excellent | Good | Bad | Good | Excellent | Good | Excellent |
| High-speed production stability | Good | Excellent | Good | Bad | Excellent | Good | Good |
| Film properties | | | | | | | |
| Haze [%] | 3.2 | 1.9 | 3.2 | 2.9 | 2.2 | 2.5 | 3.1 |
| Gloss [%] | 118 | 125 | 110 | 112 | 121 | 116 | 114 |
| Blocking force [g/cm] | 3.9 | 4.2 | 4.0 | 6.2 | 4.1 | 4.1 | 6.3 |
| Film impact strength [kg.cm/cm] | 4000 | 4800 | 4500 | 2300 | 3300 | 2100 | 1500 |
| Elmendorf tear strength [kg/cm] | 120/120 | 105/110 | 145/170 | 115/130 | 95/110 | 110/170 | 105/130 |
| Sealing starting temp. [°C] | 120 | 120 | 120 | 125 | 120 | 120 | 125 |
| Absolute sealing strength [g/15mm] | 8000 | 8000 | 8500 | 8000 | 8000 | 8500 . | 8000 |
| Reduction in thickness by sealing | Good | Good | Bad | Good | Excellent | Good | Excellent |

Preparation Example 13

Preparation of ethylene/1-hexene copolymer [M-LLDPE (13)]

A catalyst was prepared in the same manner as in Preparation Example 1, except that, in "Preparation of catalyst component", 20 liters of the toluene solution of bis (1,3-dimethylcyclopentadienyl)zirconium dichloride (Zr = 28.4 mmol/l) was replaced with 31.6 liters of a toluene solution of ethylenebis(indenyl)zirconium dichloride (Zr = 18.0 mmol/l). Using the catalyst thus obtained, an ethylene/1-hexene copolymer [M-LLDPE (13)] having an ethylene content of 79.1 % by weight was prepared in the same manner as in Preparation Example 1, except that the gas composition was altered so as to obtain the copolymer [M-LLDPE (13)] which had density and MFR values as shown in Table 7.
The properties of the resulting ethylene/1-hexene copolymer [metallocene catalyzed linear low-density polyethylene: M-LLDPE (13)] are set forth in Table 7.

Example D1

An urethane anchor coating agent was coated on a biaxially orientated nylon film (Ny) having a thickness of 15 µm, and evaporated a solvent. Then, a Ziegler catalyzed linear low-density polyethylene [LLDPE: MFR (ASTM D 1238, 190 °C, load of 2.16 kg) = 7.0 g/10 min; and density = 0.921 g/cm$^3$] was extrusion laminated in a thickness of 25 µm onto the anchor coat on the nylon film. The extrusion lamination of the linear low-density polyethylene was carried out using a single laminator of 700 mm in width (65 mm$\varnothing$ extruder) manufactured by Sumitomo Jukikai Kogyo K.K. under the conditions of a processing rate (take-up rate) of 80 m/min, a resin temperature under a die of 295 °C and an air gap of 130 mm.
Subsequently, onto the extrusion laminated layer, was further extrusion laminated the ethylene/1-hexene copolymer obtained in Preparation Example 13 [M-LLDPE (13): ethylene content = 79.1 % by weight; density (ASTM D 1505) = 0.895 g/cm$^3$; MFR (ASTM D 1238, 190 °C, load of 2.16 kg) = 5.2 g/10 min; MT = 2.3 g; W = 11.0 % by weight; Tm = 89.6 °C] in a thickness of 25 µm, to obtain a laminate film in which the layer of M-LLDPE (13) is a sealant layer (innermost layer). The extrusion lamination of M-LLDPE (13) was carried out using a single laminator of 700 mm in width (65 mmø extruder) manufactured by Sumitomo Jukikai Kogyo K.K. under the conditions of a processing rate (take-up rate) of 80 m/min, a resin temperature under a die of 295 °C (measured value) and an air gap of 130 mm and under the same extrusion conditions as shown in Table 7.
The laminated film thus obtained was measured for its processability (neck-in and high-speed flowability), heat-sealing properties (heat-sealing starting temperature and absolute sealing strength), hot tack property and bag breaking strength by the test methods as described below. The results obtained are set forth in Table 8.

[Test methods]

(1) Molding processability of laminated film

(a) Neck-in (NI)

A molten polyethylene was extruded by an extruder of 65 mm in diameter through a T-die to coat a substrate (orientated polyamide film having a thickness of 15 µm) in a thickness of 20 µm at a rate of 80 m/min. The difference between the die slit width (500 mm) and the coating film was found. This difference (mm) was taken as the neck-in.

(b) High-speed flowability

In the above-mentioned neck-in measurement, the take-up rate was increased while the throughput of the molten polyethylene was kept constant, and a take-up rate at which break of the edge took place was measured. This take-up rate was taken as the high-speed flowability.

(2) Heat-sealing properties

Two laminated films (550 mm length $\times$ 50 mm width) were superposed one upon another so as to face sealant layers to each other, and were sealed using a sealing bar of 10 mm in width and 300 mm in length at 90 °C, 95 °C, 100 °C, 105 °C, 110 °C, 115 °C, 120 °C, 125 °C, 130 °C and 140 °C, respectively, and at a pressure of 2 kg/cm$^2$ for 0.5 second, followed by allowing to cool. A specimen of 15 mm in width was cut out from the resulting sealed film, and the heat-sealed portion thereof was peeled at a crosshead speed of 300 mm/min and a peel angle of 180°, to measure peel strength. The peel strength as measured was taken as an indication of the heat-sealing properties.

In this regard, the term "heat-sealing starting temperature" means a temperature immediately after a heat-sealing surface in the measurement of heat-sealing strength is changed from interfacial peel to cohesive peel.

The term "absolute sealing strength" means a sealing strength at a heat-sealing temperature of 140 °C.

(3) Hot tack property

Two specimens (550 mm length x 50 mm width) were superposed one upon another, and were sealed using a sealing bar of 10 mm in width and 300 mm in length at 90 °C, 100 °C, 110 °C, 120 °C, 130 °C, 140 °C and 150 °C, respectively, and at a pressure of 2 kg/cm$^2$ for 0.5 second. Thereafter, the pressure was removed and at the same time, the sealed portion of each specimen was forced to peel under a load of 45 g at a peel angle of 22.5°, to measure a peeled length. The peeled length (mm) as measured was taken as an indication of the hot tack property. The shorter is the peeled length, the greater is the resistance to peel force immediately after heat sealing, i.e., the shorter peeled length is more preferable (hot tack property is more excellent).

(4) Bag breaking strength

Two laminated films were superposed one upon another so as to face sealant layers to each other, and were heat sealed on four sides using a sealing bar of 10 mm in width under the conditions of a heat-sealing temperature of 160 °C, a heat-sealing pressure of 3 kg/cm$^2$ and a heat-sealing time of 1 second, to obtain a bag having a size of 90 mm $\times$ 120 mm.

The bag thus obtained was measured for its breaking strength (static pressure) in the following manner.

A sample (bag) was held between flat plates on a loading cell of a universal material testing machine manufactured by Intesco K.K., and was pressed at a pressing rate of 10 mm/min, to read a pressure at which the bag was broken. The content in the bag was 100 cm$^3$ of water.

Example D2

A laminated film was produced in the same manner as in Example D1 under the molding conditions as shown in Table 7, except that the ethylene/1-hexene copolymer obtained in Preparation Example 13 [M-LLDPE (13)] was replaced with a blend of 80 parts by weight of the metallocene catalyzed linear low-density polyethylene obtained in Preparation Example 13 [M-LLDPE (13)] and 20 parts by weight of a high-pressure low-density polyethylene [HPLDPE: MFR (ASTM D 1238, 190 °C, load of 2.16 kg) = 2.9 g/10 min; and density (ASTM D 1505) = 0.917 g/cm$^3$].

The laminated film thus obtained was measured for its processability (neck-in and high-speed flowability), heat-sealing properties (heat-sealing starting temperature and absolute sealing strength), hot tack property and bag breaking strength by the test methods as described above. The results obtained are set forth in Table 8.

Comparative Example D1

An ethylene/1-hexene copolymer [Ziegler catalyzed linear low-density polyethylene: T-LLDPE] was prepared in the same manner as in Preparation Example 1, except that bis(1,3-dimethylcyclopentadienyl)zirconium dichloride was replaced with a titanium type catalyst component as described in JP-B-63-54289, the methyl aluminoxane was replaced with triethylaluminum, the gas composition was adjusted, and the polymerization temperature was altered to 70 °C.

A laminated film was produced in the same manner as in Example D1 under the molding conditions as shown in Table 7, except that the ethylene/1-hexene copolymer obtained in Preparation Example 13 [M-LLDPE (13)] was replaced with the Ziegler catalyzed linear low-density polyethylene as obtained above [T-LLDPE: ethylene content = 82.5 % by weight; density (ASTM D 1505) = 0.915 g/cm$^3$; MFR (ASTM D 1238, 190 °C, load of 2.16 kg) = 15.0 g/10 min; MT < 0.1 g; Tm = 121.0 °C and W = 11.2 % by weight].

The laminated film thus obtained was measured for its processability (neck-in and high-speed flowability), heat-sealing properties (heat-sealing starting temperature and absolute sealing strength), hot tack property and bag breaking strength by the test methods as described above. The results obtained are set forth in Table 8.

Comparative Example D2

A laminated film was produced in the same manner as in Comparative Example D1 under the molding conditions as shown in Table 7, except that the Ziegler catalyzed linear low-density polyethylene used in Comparative Example D1 [T-LLDPE] was replaced with a blend of 80 parts by weight of this Ziegler catalyzed linear low-density polyethylene [T-LLDPE] and 20 parts by weight of a high-pressure low-density polyethylene [HPLDPE: MFR (ASTM D 1238, 190 °C, load of 2.16 kg) = 2.9 g/10 min; and density (ASTM D 1505) = 0.917 g/cm$^3$].

The laminated film thus obtained was measured for its processability (neck-in and high-speed flowability), heat-sealing properties (heat-sealing starting temperature and absolute sealing strength), hot tack property and bag breaking strength by the test methods as described above. The results obtained are set forth in Table 8.

Comparative Example D3

The ethylene/1-hexene copolymer [metallocene catalyzed linear low-density polyethylene: M-LLDPE] described in Table 7 was prepared in the same manner as in Preparation Example 1, except that the gas composition was altered so as to obtain the copolymer [M-LLDPE] which had density and MFR values as shown in Table 7, the ethylene concentration was altered to 25 %, and the polymerization temperature was altered to 65 °C.

A laminated film was produced in the same manner as in Comparative Example D1 under the molding conditions as shown in Table 7, except that the Ziegler catalyzed linear low-density polyethylene [T-LLDPE] used in Comparative Example D1 was replaced with a blend of 80 parts by weight of the metallocene catalyzed linear low-density polyethylene as obtained above [M-LLDPE: ethylene content = 79.8 % by weight; density (ASTM D 1505) = 0.895 g/cm$^3$; MFR (ASTM D 1238, 190 °C, load of 2.16 kg) = 15.0 g/10 min; MT < 0.1 g; W = 10.3 % by weight; and Tm = 89.1 °C] and 20 parts by weight of a high-pressure low-density polyethylene [HPLDPE: MFR (ASTM D 1238, 190 °C, load of 2.16 kg) = 2.9 g/10 min; and density (ASTM D 1505) = 0.917 g/cm$^3$].

The laminated film thus obtained was measured for its processability (neck-in and high-speed flowability), heat-sealing properties (heat-sealing starting temperature and absolute sealing strength), hot tack property and bag breaking strength by the test methods as described above. The results obtained are set forth in Table 8.

Table 7

|  | Example D1 | Example D2 | Comp. Ex. D1 | Comp. Ex. D2 | Comp. Ex. D3 |
|---|---|---|---|---|---|
| Sealant layer |  |  |  |  |  |
| LLDPE/HPLDPE [wt ratio] | 100/0 | 80/20 | 100/0 | 80/20 | 80/20 |
| LLDPE Kind | M-LLDPE (13) | M-LLDPE (13) | T-LLDPE | T-LLDPE | M-LLDPE |
| MFR [g/10min] | 5.2 | 5.2 | 15.0 | 15.0 | 15.0 |
| d [g/cm$^3$] | 0.895 | 0.895 | 0.915 | 0.915 | 0.895 |
| MT (190°C) [g] | 2.3 | 2.3 | <0.1 | <0.1 | <0.1 |
| Tm [°C] | 89.6 | 89.6 | 121.0 | 121.0 | 89.1 |
| W [wt%] | 11.0 | 11.0 | 11.2 | 11.2 | 10.3 |
| Extrusion conditions |  |  |  |  |  |
| Screw revolution number [rpm] | 56 | 51 | 85 | 61 | 75 |
| Resin pressure P [kg/cm$^2$] | 109 | 97 | 188 | 172 | 174 |
| Resin throughput K [kg/hr] | 54 | 54 | 54 | 54 | 54 |
| Resin temp. T [°C] | 295 | 295 | 295 | 295 | 295 |
| Lip sectional area A [cm$^2$] | 4.0 | 4.0 | 4.0 | 4.0 | 4.0 |
| 200Z/450Z | 91/205 | 95/213 | 66/149 | 73/165 | 73/165 |

(Note 1) HPLDPE: High-pressure low-density polyethylene (MFR = 2.9 g/10 min; density = 0.917 g/cm$^3$)

(Note 2) "Z" of 200Z and 450Z: $Z = [K/(MFR^{1.5})/(T-120)/A^{0.2}]^{0.2}$

In Table 7 above:

M-LLDPE (13):

$2.2 \times MFR^{-0.84} = 0.6$

$400 \times d - 248 = 110.0$

$80 \times \exp(-100(d-0.88)) + 0.1 = 19.7$

T-LLDPE:

$2.2 \times MFR^{-0.84} = 0.2$

$400 \times d - 248 = 118.0$

$80 \times (MFR-9)^{0.26} \times \exp(-100(d-0.88)) + 0.1 = 4.3$

M-LLDPE:

$2.2 \times MFR^{-0.84} = 0.2$

$400 \times d - 248 = 110.0$

$80 \times (MFR-9)^{0.26} \times \exp(-100(d-0.88)) + 0.1 = 31.4$

Table 8

| | Example D1 | Example D2 | Comp. Ex. D1 | Comp. Ex. D2 | Comp. Ex. D3 |
|---|---|---|---|---|---|
| Processability | | | | | |
| Neck-in [mm] | 53 | 49 | 115 | 66 | 62 |
| High-speed flowability [m/min] | >200 | >200 | >200 | >200 | >200 |
| Properties of laminated film | | | | | |
| Heat-sealing starting temp. [°C] | 100 | 105 | 120 | 125 | 105 |
| Absolute sealing strength [N/15mm] | 62 | 58 | 61 | 60 | 58 |
| Hot tack property Peeled length [mm] Heat-sealing temp. | | | | | |
| 90°C | 155 | 186 | >300 | >300 | 198 |
| 100°C | 50 | 57 | >300 | >300 | 52 |
| 110°C | 12 | 20 | 220 | 263 | 15 |
| 120°C | 6 | 8 | 19 | 29 | 9 |
| 130°C | 15 | 17 | 10 | 11 | 15 |
| 140°C | 15 | 21 | 17 | 13 | 17 |
| 150°C | 40 | 34 | 46 | 38 | 32 |
| Bag breaking strength [kg] | 610 | 530 | 550 | 510 | 520 |

Examples regarding polyethylene resin inner containers for bag-in-box

Preparation Example 14

Preparation of ethylene/1-hexene copolymer [M-LLDPE (14)]

An ethylene/1-hexene copolymer [M-LLDPE (14)] having an ethylene content of 93.7 % by weight was prepared in the same manner as in Preparation Example 1, except that the gas composition was altered so as to obtain the copolymer [M-LLDPE (14)] which had density and MFR values as shown in Table 9, and the polymerization temperature was altered to 85 °C.

The properties of the resulting ethylene/1-hexene copolymer [metallocene catalyzed linear low-density polyethylene: M-LLDPE (14)] are set forth in Table 9.

Preparation Example 15

Preparation of ethylene/1-hexene copolymer [M-LLDPE (15)]

An ethylene/1-hexene copolymer [M-LLDPE (15)] having an ethylene content of 91.8 % by weight was prepared in the same manner as in Preparation Example 1, except that the gas composition was altered so as to obtain the copolymer [M-LLDPE (15)] which had density and MFR values as shown in Table 9, and the polymerization temperature altered to 80 °C.

The properties of the resulting ethylene/1-hexene copolymer [metallocene catalyzed linear low-density polyethylene: M-LLDPE (15)] are set forth in Table 9.

Preparation Example 16

Preparation of ethylene/1-hexene copolymer [M-LLDPE (16)]

An ethylene/1-hexene copolymer [M-LLDPE (16)] having an ethylene content of 92.6 % by weight was prepared in the same manner as in Preparation Example 1, except that the catalyst was replaced with that used in Preparation Example 7, the gas composition was altered so as to obtain the copolymer [M-LLDPE (16)] which had density and MFR values as shown in Table 9, and the polymerization temperature altered to 85 °C.
The properties of the resulting ethylene/1-hexene copolymer [metallocene catalyzed linear low-density polyethylene: M-LLDPE (16)] are set forth in Table 9.

Preparation Example 17

Preparation of ethylene/1-hexene copolymer [M-LLDPE (17)]

An ethylene/1-hexene copolymer [M-LLDPE (17)] having an ethylene content of 91.8 % by weight was prepared in the same manner as in Preparation Example 1, except that the catalyst was replaced with that used in Comparative Example D1, the gas composition was altered so as to obtain the copolymer [M-LLDPE (17)] which had density and MFR values as shown in Table 9, and the polymerization temperature was altered to 80 °C.
The properties of the resulting ethylene/1-hexene copolymer [metallocene catalyzed linear low-density polyethylene: M-LLDPE (17)] are set forth in Table 9.

Preparation Example 18

Preparation of ethylene/1-hexene copolymer [M-LLDPE (18)]

An ethylene/1-hexene copolymer [M-LLDPE (18)] having an ethylene content of 94.0 % by weight was prepared in the same manner as in Preparation Example 1, except that the catalyst was replaced with that used in Comparative Example D1, the gas composition was altered so as to obtain the copolymer [M-LLDPE (18)] which had density and MFR values as shown in Table 9, and the polymerization temperature was altered to 85 °C.
The properties of the resulting ethylene/1-hexene copolymer [metallocene catalyzed linear low-density polyethylene: M-LLDPE (18)] are set forth in Table 9.

Example E1

Granulated pellets of a polyethylene resin comprising the metallocene catalyzed linear low-density polyethylene obtained in Preparation Example 14 [M-LLDPE (14): ethylene content = 93.7 % by weight; density (ASTM D 1505) = 0.927 g/cm$^3$; MFR (ASTM D 1238, 190 °C, load of 2.16 kg) = 1.0 g/10 min; MT = 3.6 g; W = 0.2 % by weight; Tm = 116.8 °C; and the number of peaks in DSC endothermic curve = 2] were melted in a 65 mmØ cast molding machine (single screw extruder of L/D = 28) manufactured by Toshiba Co., and two sheets having a thickness of 1 mm were extruded from two T-dies which had a lip width of 800 mm and a lip spacing of 1.2 mm and which were arranged in parallel to each other in an interval of 50 mm under the conditions of a resin throughput of 40 kg/hr·die, a resin pressure of 230 kg/cm$^2$, a sheet extrusion rate of 4.1 m/min and a resin temperature of 215 °C. Immediately thereafter, the sheets were vacuum molded by the use of a mold having such a shape that peripheries of halves of the resulting inner container can be joined with their diagonals, to produce a 20 liter inner container for bag-in-box. Samples were cut out of the resulting inner container from its portion having a uniform thickness of about 500 μm, and were subjected to the following film properties evaluation tests. The results obtained are set forth in Table 9.

[Film properties evaluation tests]

(1) Blocking force

A sample having a size of 7 cm (width) x 20 cm was sandwiched between two sheets of typewriting paper and then further sandwiched between two glass plates. To the resulting sandwich was applied a load of 10 kg in an air bath at 50 °C for 24 hours, and then the film was separated at a rate of 200 mm/min by means of a gripping tool. The blocking force [F (g/cm)] was represented by the formula:

F = A/width of specimen,

where A (g) is an applied load required to separate the film. The smaller is the F value, the smaller is the blocking tendency, i.e., the blocking force is better.

(2) Anti-pinhole properties

2,000 times of torsion were repeatedly applied to the film by means of a Gelbo Flex tester, and then the number of pinholes produced in an area of 20.5 cm × 28.0 cm of the film was counted. The anti-pinhole properties were evaluated by the number of pinholes thus counted.

(3) Flex resistance

A flex test was carried out in accordance with JISP-8115 in an atmosphere at -5 °C. The flex resistance was evaluated by the number of flexings which was given until the specimen was broken.

Examples E2 and E3 and Comparative Examples E1 and E2

A 20 liter inner container for bag-in-box was produced in the same manner as in Example E1, except that the ethylene/1-hexene copolymer [M-LLDPE (14)] was replaced with the ethylene/1-hexene copolymers obtained Preparation Examples 15 to 18 [metallocene catalyzed linear low-density polyethylenes: M-LLDPEs (15) to (18)], properties of these copolymers being shown in Table 9. Samples were cut out of the resulting inner container from its portion having a uniform thickness of about 500 μm, and were subjected to the above-mentioned film properties evaluation tests. The results obtained are set forth in Table 9.

Table 9

| | Example E1 | Example E2 | Example E3 | Comp. Ex. E1 | Comp. Ex. E2 |
|---|---|---|---|---|---|
| **Polyethylene resin** | | | | | |
| Kind | M-LLDPE (14) | M-LLDPE (15) | T-LLDPE (16) | T-LLDPE (17) | M-LLDPE (18) |
| MFR        [g/10min] | 1.0 | 1.0 | 2.0 | 1.0 | 1.0 |
| d       [g/cm$^3$] | 0.927 | 0.920 | 0.924 | 0.920 | 0.927 |
| MT (190°C)        [g] | 3.6 | 3.4 | 3.0 | 1.6 | 1.6 |
| Tm       [°C] | 116.8 | 113.8 | 115.5 | 113.6 | 116.6 |
| Number of peaks in endthermic curve | 2 | 2 | 2 | 2 | 2 |
| W       [wt%] | 0.2 | 0.3 | 0.2 | 0.3 | 0.1 |
| **Extrusion conditions** | | | | | |
| Screw revolution No. [rpm] | 40 | 40 | 40 | 40 | 40 |
| Resin pressure P       [kg/cm$^2$] | 230 | 230 | 190 | 320 | 318 |
| Resin throughput K [kg/hr] | 40 | 40 | 55 | 30 | 30 |
| Resin temp.       T[°C] | 215 | 215 | 210 | 260 | 260 |
| Lip sectional area A[cm$^2$] | 9.6 | 9.6 | 9.6 | 9.6 | 9.6 |
| 200Z/450Z | 154/346 | 154/346 | 134/302 | 134/302 | 134/302 |
| **Properties of film** | | | | | |
| Blocking force       [g/cm] | 0 | 0.8 | 0.4 | 1.3 | 0.5 |
| Anti-pinhole Properties (-5°C)       [number] | 7 | 0 | 5 | 9 | 15 |
| Flex resistance (-5°C)       [times] | >10000 | >10000 | >10000 | 8000 | 6000 |

Table 9 (continued)

|  | Example E1 | Example E2 | Example E3 | Comp. Ex. E1 | Comp. Ex. E2 |
|---|---|---|---|---|---|
| Properties of film | | | | | |
| (Note) "Z" of 200Z and 450Z: $Z = [K/(MFR^{1.5})/(T-120)/A^{0.2}]^{0.2}$ | | | | | |

In Table 9 above:

M-LLDPE (14):

$2.2 \times MFR^{-0.84} = 2.2$

$400 \times d - 248 = 122.8$

$80 \times \exp(-100(d-0.88)) + 0.1 = 0.8$

M-LLDPE (15):

$2.2 \times MFR^{-0.84} = 2.2$

$400 \times d - 248 = 120.0$

$80 \times \exp(-100(d-0.88)) + 0.1 = 1.6$

M-LLDPE (16):

$2.2 \times MFR^{-0.84} = 1.2$

$400 \times d - 248 = 121.6$

$80 \times \exp(-100(d-0.88)) + 0.1 = 1.1$

M-LLDPE (17):

$2.2 \times MFR^{-0.84} = 2.2$

$400 \times d - 248 = 120.0$

$80 \times \exp(-100(d-0.88)) + 0.1 = 1.6$

M-LLDPE (18):

$2.2 \times MFR^{-0.84} = 2.2$

$400 \times d - 248 = 122.8$

$80 \times \exp(-100(d-0.88)) + 0.1 = 0.8$

## Claims

1. A packaging film layer

   (a) comprising an ethylene/$\alpha$-olefin copolymer (A) comprising ethylene and $C_{3\ to\ 20}$ $\alpha$-olefin and having:

   (i) a melt tension (MT (g)) at 190 °C and a melt flow rate (MFR (g/10 min)) which satisfy the following relation:

$$MT > 2.2 \times MFR^{-0.84};$$

   (ii) a quantity fraction (W (% by weight)) of n-decane-soluble component at room temperature and a density (d (g/cm$^3$)) which satisfy the following relation:

   in the case of MFR ≤ 10 g/10 min:

$$W < 80 \times \exp(-100(d-0.88)) + 0.1$$

   and,
   in the case of MFR > 10 g/10 min:

$$W < 80 \times (MFR-9)^{0.26} \times \exp(-100(d-0.88)) + 0.1;$$

   (iii) a temperature (Tm (°C )) at maximum peak position in an endothermic curve as measured by a differential scanning calorimeter (DSC) and a density (d (g/cm$^3$)) which satisfy the following relation:

$$Tm < 400 \times d - 248,$$

and

(b) obtainable by molding a resin under the following conditions:
the melt flow rate (MFR (g/10 min)) of the resin, the resin pressure P (kg/cm$^2$), the resin temperature T ($^\circ$C ), the resin throughput K (kg/hr) and the lip sectional area A (cm$^2$) of a film forming machine satisfy the following relation:

$$200 \times [K/(MFR^{1.5})/(T-120)/A^{0.2}]^{0.2} \le P$$

$$\le 450 \times [K/MFR^{1.5})/(T-120)/A^{0.2}]^{0.2}$$

2. A film layer according to claim 1, wherein the ethylene/a-olefin copolymer (A) further has (iv) at least two peaks in the endothermic curve as measured by a differential scanning calorimeter (DSC).

3. A film layer according to claim 1 or claim 2 wherein the ethylene/$\alpha$-olefin copolymer (A) comprises a non-eluting fraction at a temperature of lower than 100 $^\circ$C in an amount of 10% or less based on the total amount of the copolymer as measured by a temperature rise elution test (TREF).

4. A film layer according to any one of claims 1 to 3 wherein the ethylene/$\alpha$-olefin copolymer (A) comprises more than 3 long chain branches having at least 6 carbon atoms, as measured by NMR, per 1,000 carbon atoms.

5. A film layer according to any one of claims 1 to 4, wherein the copolymerised $\alpha$-olefin has more than 7 carbon atoms.

6. A film layer according to any one of claims 1 to 3, wherein the ethylene/$\alpha$-olefin copolymer (A) comprises not more than 3 long chain branches having at least 6 carbon atoms, as measured by NMR, per 1,000 carbon atoms and the copolymerised $\alpha$-olefin has not more than 7 carbon atoms.

7. A film layer according to any one of the preceding claims, wherein the ethylene/$\alpha$-olefin copolymer (A) has a melt flow rate (ASTM D1238, 190 $^\circ$C, load of 2.16 kg) of from 0.01 to 100 g/10 min.

8. A film layer according to any one of the preceding claims wherein said layer comprises a blend of ethylene/$\alpha$-olefin copolymer (A) and high-pressure low density polyethylene (B) in an amount of 80% or less by weight.

9. A process for the production of a film layer according to any one of claims 1 to 8, which process comprises molding a resin under the following conditions:
the melt flow rate (MFR (g/10 min)) of the resin, the resin pressure P (kg/cm$^2$), the resin temperature T ($^\circ$C ), the resin throughput K (kg/hr) and the lip sectional area A (cm$^2$) of a film forming machine satisfy the following relation:

$$200 \times [K/(MFR^{1.5})/(T-120)/A^{0.2}]^{0.2} \le P$$

$$\le 450 \times [K/MFR^{1.5})/(T-120)/A^{0.2}]^{0.2}$$

10. A packaging film comprising one or more film layers, at least one of which layers is a film layer according to any one of claims 1 to 8 or produced by a process according to claim 9.

11. Use of a film layer according to claim 10 as a shrink packaging film, stretch packaging film or sealant film or for the production of a polyethylene resin inner container for bag-in-box or a pouch.

12. A shrink packaging film having a thickness of from 20 to 100 µm comprising at least one film layer according to any one of claims 1 to 8 wherein said layer is obtainable by a blown-film extrusion process under the following conditions:

the ratio of tubular film diameter: die lip diameter is from 3.5:1 to 5:1;
the whitening height is from 1 to 5 times the die lip diameter.

**13.** A multilayered shrink packaging film according to claim 12 comprising two or more layers in which the molecules have monoaxial or biaxial orientation.

**14.** A sealant film comprising one or more layers, at least one of which layers is a film layer according to any one of claims 1 to 8.

**15.** A film according to claim 14 comprising at least one layer in which the molecules have a monoaxial or biaxial orientation.

**16.** A film according to claim 14 or claim 15, wherein the sealant layer is obtainable by a cast molding process or a blown-film extrusion process.

**17.** A film according to any one of claims 14 to 16 obtainable by an extrusion laminating process, wherein at least one layer is a sealant layer comprising an ethylene/$\alpha$-olefin copolymer (A) having a melt flow rate (ASTM D 1238, 190 °C, load of 2.16 kg) of from 3 to 50 g/10 min.

**18.** Use of a sealant film according to any one of claims 14 to 17 in the production of a pouch.

**19.** A pouch formed from a sealant film according to any one of claims 14 to 17.

## Fig. 1

# Fig. 2